# EUROPÄISCHE PATENTSCHRIFT

(11) **EP 3 697 689 B1**
(45) Veröffentlichungstag und Bekanntmachung des Hinweises auf die Patenterteilung: **21.06.2023**
(21) Anmeldenummer: 18795337.7
(22) Anmeldetag: 18.10.2018
(51) Int. Cl.: B64D 11/06, B60N 2/00, B60N 2/24, B60N 2/68

(54) **FLUGZEUGSITZREIHE MIT MULTIPUNKTRÜCKHALTEEINHEITEN**
AIRCRAFT SEAT ROW WITH MULTI-POINT RESTRAINT UNITS
FILE DE SIÈGES D'AVION DOTÉ DES UNITÉS DE RETENUE MULTIPOINT

(30) Priorität: 18.10.2017 DE 102017124349
(43) Veröffentlichungstag der Anmeldung: 26.08.2020
(73) Patentinhaber: Recaro Aircraft Seating GmbH & Co. KG, 74523 Schwäbisch Hall (DE)
(72) Erfinder: JUSSLI, Zoltan, 74626 Bretzfeld (DE); STROBL, Florian, 96181 Rauhenebrach (DE); DAHER, Mohammed, 71334 Waiblingen (DE); KAMMERER, Jürgen, 74541 Vellberg (DE); WAGNER, Andreas, 95326 Kulmbach (DE); RIEDEL, Dirk, 74542 Braunsbach (DE)
(74) Vertreter: Daub, Thomas
(86) Internationale Anmeldenummer: PCT/EP2018/078646
(87) Internationale Veröffentlichungsnummer: WO 2019/077081

(56) Entgegenhaltungen:
- EP-A1- 3 124 382
- EP-A2- 2 610 178
- US-A1- 2006 103 191
- US-A1- 2017 283 079

## Beschreibung

### Stand der Technik

Die Erfindung betrifft eine Flugzeugsitzreihe nach dem Oberbegriff des Patentanspruchs 1.

Es sind bereits Flugzeugsitzreihen inklusive Flugzeugsitzvorrichtungen mit einer Sicherheitsvorrichtung, die zur Sicherung eines Passagiers auf einem Flugzeugsitz vorgesehen ist, vorgeschlagen worden. Das Dokument US 2006/103191 A1 zeigt eine solche Flugzeugsitzreihe mit den Merkmalen der Präambel des Anspruchs 1

Die Aufgabe der Erfindung besteht insbesondere darin, eine gattungsgemäße Flugzeugsitzreihe mit verbesserten Eigenschaften hinsichtlich einer Sicherheit bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Erfindungsgemäß wird eine Flugzeugsitzreihe nach Anspruch 1 vorgeschlagen, mit drei im Wesentlichen gleich ausgebildeten Flugzeugsitzen, die jeweils eine Rückenlehne und eine Flugzeugsitzvorrichtung umfassen, wobei die Flugzeugsitzvorrichtung wenigstens eine Sicherheitsvorrichtung, die zur Sicherung eines Passagiers auf einem Flugzeugsitz vorgesehen ist und zumindest eine Multipunktrückhalteeinheit aufweist. Unter einer "Flugzeugsitzvorrichtung" soll dabei insbesondere eine Vorrichtung verstanden werden, die zumindest einen Teil eines Flugzeugsitzes oder einen gesamten Flugzeugsitz ausbildet. Unter einem "Flugzeugsitz" soll dabei insbesondere ein Sitz verstanden werden, der dazu vorgesehen ist, in einer Flugzeugkabine eines Flugzeugs auf einem Kabinenboden aufgeständert zu werden, und auf dem ein Passagier während eines Flugs sitzen kann. Dabei weist der Flugzeugsitz zumindest einen Sitzboden und eine mit dem Sitzboden gekoppelte Rückenlehne auf, wobei die Rückenlehne vorzugsweise verschwenkbar mit dem Sitzboden verbunden ist, wodurch der Flugzeugsitz vorzugsweise in unterschiedliche Funktionsstellungen bewegbar ist. Unter einer "Aufständereinheit" soll dabei insbesondere eine Einheit verstanden werden, über die der Flugzeugsitz fest mit einem Kabinenboden gekoppelt ist und dazu insbesondere wenigstens einen Sitzfuß, der über eine Befestigungsschiene fest mit dem Kabinenboden gekoppelt ist, und wenigstens ein mit dem Sitzfuß verbundenes Querelement aufweist, an dem zumindest ein Sitzteiler und/oder ein Sitzboden des Flugzeugsitzes angebunden ist. Unter einer "Rückenlehne" soll dabei insbesondere ein Element des Flugzeugsitzes verstanden werden, das zumindest einen Teil einer Rückenlehnenauflagefläche ausbildet, an der ein auf dem Flugzeugsitz sitzender Passagier seinen Rücken anlehnen kann. Dabei umfasst die Rückenlehne vorzugsweise zumindest einen Grundkörper und eine Polstereinheit, welche die Rückenlehnenauflagefläche ausbildet. Die Rückenlehne weist vorzugsweise einen tragenden Rahmen auf, über den die Rückenlehne mit der Aufständereinheit und/oder dem Sitzboden verbunden ist. Ein Rahmen der Rückenlehne kann dabei als ein umlaufender Rahmen, beispielsweise aus einem Leichtmetall, oder einstückig mit dem Rest der Rückenlehne aus einem selbsttragenden Faserverbundwerkstoff gebildet sein. Die Rückenlehne ist dabei an einem hinteren Ende des Sitzbodens angeordnet und erstreckt sich von der Sitzbodeneinheit nach oben, von einer Aufständereinheit weg. Unter einem "Sitzboden" soll dabei insbesondere ein Bauteil eines Flugzeugsitzes verstanden werden, das einen Sitzbereich für einen Passagier ausbildet. Unter einem "Sitzbereich" soll dabei insbesondere ein Bereich des Flugzeugsitzes verstanden werden, der dazu vorgesehen ist, dass ein Passagier, insbesondere während eines Flugs, darauf sitzt. Unter einer "Sicherheitsvorrichtung" soll dabei insbesondere eine Vorrichtung verstanden werden, die dazu vorgesehen ist, durch direkt auf einen Passagier oder passiv auf den Flugzeugsitz oder auf andere Elemente, die in der Umgebung des Flugzeugsitzes angeordnet sind, wirkende Maßnahmen in einem Crashfall auf einen Passagier wirkende Kräfte und/oder Verletzungsgefahren für den Passagier zu verringern. In einem Prüfcrashfall ist die Sicherheitsvorrichtung dabei dazu vorgesehen, auf einen Crashtestdummy wirkende Kräfte zu verringern und/oder Aufschlagswinkel und/oder Aufschlagsbereiche für einen ungefährlicheren Aufprall zu verbessern. Unter einer "Multipunktrückhalteeinheit" soll dabei insbesondere eine Rückhalteeinheit verstanden werden, mittels der ein Passagier zumindest in einem geschlossenen Zustand auf dem Sitz gehalten wird, wobei die Rückhalteeinheit dazu insbesondere wenigstens ein Gurtband aufweist, das vorzugsweise von einem Gewebeband gebildet ist und in dem geschlossenen Zustand an wenigstens drei Anbindungspunkten fest mit dem Flugzeugsitz, insbesondere mit einer tragenden Struktur des Flugzeugsitzes, verbunden ist. Dabei sind die drei Anbindungspunkte der Multipunktrückhalteeinheit in einem geschlossenen Zustand über das wenigstens eine Gurtband alle miteinander verbunden. Die Multipunktrückhalteeinheit ist dabei als ein Dreipunktgurt ausgebildet. Dazu ist die Multipunktrückhalteeinheit an zumindest einer Stelle vorzugsweise stetig und untrennbar mit dem Flugzeugsitz verbunden und an zwei weiteren Stellen zumindest in einem geschlossenen Zustand der Multipunktrückhalteeinheit mit dem Flugzeugsitz fest verbunden. Die Multipunktrückhalteeinheit weist dabei einen Beckengurt auf, der in dem geschlossenen Zustand den Sitzboden überspannt und insbesondere einen Becken- und Hüftbereich des Passagiers sichert. Die Multipunktrückhalteeinheit weist dabei einen Schultergurt auf, der in einem geschlossenen Zustand die Rückenlehne überspannt und so einen Torso des Passagiers sichert. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Dadurch kann eine besonders vorteilhaft sichere Flugzeugsitzvorrichtung bereitgestellt werden.

Weiter wird vorgeschlagen, dass die Sicherheitsvorrichtung dazu vorgesehen ist, einen Kopfkontakt in einem Prüfcrashfall mit einer vorgelagerten Einheit zuzulassen. Unter einem "Prüfcrashfall" soll dabei insbesondere ein Crashtest entsprechend einem Prüfverfahren, insbesondere einem Crashtestverfahren, verstanden werden, bei dem gezielt zumindest ein Flugzeugsitz und ein darauf sitzender Crashtestdummy auf einer entsprechenden Prüfvorrichtung zur Messung von Beschleunigungswerten, die zumindest auf den Crashtestdummy wirken, zumindest beschleunigt und abrupt verzögert werden. Unter dem Prüfcrashfall soll dabei insbesondere ein Beschleunigungstest, insbesondere ein sogenannter HIC-Test (Head Injury Criterion-Test) verstanden werden, in dem eine Aufprallenergie ermittelt wird, die bei einem Aufprall eines Crashtestdummys, insbesondere eines Kopfs des Crashtestdummys, auf einer vorgelagerten Einheit wirkt. Ein Prüfverfahren, nach dem der Prüfcrashfall durchgeführt wird, ist dabei insbesondere entsprechend der Norm CS25.562 oder gemäß der Prüfvorschrift AS8049 ausgebildet. Unter einem "Crashtestdummy" soll dabei insbesondere ein Testdummy verstanden werden, der einem durchschnittlichen erwachsenen Menschen entspricht. Grundsätzlich ist auch ein anderer, in einer entsprechenden Prüfnorm, insbesondere in der Norm CS 25.562, festgelegter Crashtestdummy denkbar, insbesondere ein Crashtestdummy der einer 5%-Frau entspricht oder ein Crashtestdummy, der einem 95%-Mann entspricht. Unter einer "vorgelagerten Einheit" soll dabei insbesondere eine Einheit verstanden werden, die vor dem Flugzeugsitz angeordnet ist und in dessen Richtung ein Crashtestdummy in dem Prüfcrashfall beschleunigt wird. Eine vorgelagerte Einheit ist dabei vorzugsweise als ein weiterer Flugzeugsitz ausgebildet oder als ein Teil eines Flugzeugsitzbereichs, wie insbesondere eine Konsole. Vorzugsweise ist die vorgelagerte Einheit insbesondere als eine in einem Normalzustand, also insbesondere während eines Fluges, vor dem Flugzeugsitz angeordnete Einheit ausgebildet. Die vorgelagerte Einheit ist vorzugsweise als eine Einheit ausgebildet, die in einem montierten Zustand vorzugsweise immer vor dem Flugzeugsitz angeordnet ist. Eine vorgelagerte Einheit ist insbesondere nicht als ein Airbag oder ein anderes speziell in einem Crashfall einsetzbares und lediglich dafür vorgesehenes Aufprallelement ausgebildet, das in einem Normalbetriebszustand in einer Verstaustellung angeordnet und insbesondere nicht in einem Bereich vor dem Flugzeugsitz angeordnet ist. Unter einem "Kopfkontakt" soll dabei insbesondere ein Kontakt eines Kopfs eines Crashtestdummys, insbesondere auf der vorgelagerten Einheit, verstanden werden. Dadurch kann eine durch die Sicherheitsvorrichtung auf den Passagier und/oder den Crashtestdummy wirkende Kraft vorteilhaft gering gehalten werden.

Weiter wird vorgeschlagen, dass die Sicherheitsvorrichtung ein Kontaktfeld, insbesondere ein Kopfkontaktfeld, definiert, in dem ein Passagier in einem Prüfcrashfall mit einer vorgelagerten Einheit in Kontakt kommt. Unter einem "Kontaktfeld" soll dabei insbesondere ein Bereich auf einem vorgelagerten Element verstanden werden, auf dem ein Passagier oder ein Crashtestdummy in einem Crashfall, insbesondere einem Prüfcrashfall, auf der vorgelagerten Einheit auftrifft und diese kontaktiert. Das Kontaktfeld ist dabei insbesondere auf einer Rückseite einer Rückenlehne, auf einer Sitzumhausung, auf einer Partition eines Flugzeugs oder auf einem anderen, dem Fachmann als sinnvoll erscheinenden Bauteil, das vor einem Flugzeugsitz angeordnet sein kann, angeordnet. Eine Größe des Kontaktfelds ist dabei vorzugsweise kleiner als 200 mm auf 200 mm. Eine Größe des Kontaktfelds ist dabei insbesondere auch abhängig von einem Sitzabstand, einer Auslegung der Sicherheitsvorrichtung und einer Geometrie des Aufprallkörpers (Kopf des Crashtestdummys) und des Flugzeugsitzes. Dadurch kann die Sicherheitsvorrichtung besonders vorteilhaft ausgebildet werden.

Ferner wird vorgeschlagen, dass die Sicherheitsvorrichtung zumindest eine Freigabeeinrichtung aufweist, die dazu vorgesehen ist, in einem Prüfcrashfall eine definierte Bewegung eines Passagiers zuzulassen. Unter einer "Freigabeeinrichtung" soll dabei insbesondere eine Einrichtung verstanden werden, die dazu vorgesehen ist, eine Bewegung des Passagiers und/oder eines Crashtestdummys, insbesondere bis hin zum Kontakt mit der vorgelagerten Einheit zuzulassen, insbesondere ab einer bestimmten Grenzlast, insbesondere auch im Hüftbereich. Die Freigabeeinrichtung kann dabei beispielsweise in ein Sitzgestell eines Flugzeugsitzes integriert sein und durch Bewegung eines Sitzbodens des Flugzeugsitzes eine definierte Bewegung des Passagiers zulassen. Dabei ist es insbesondere auch denkbar, dass die Freigabeeinrichtung einen Gurtkraftbegrenzer umfasst. Die Freigabeeinrichtung ist insbesondere dazu vorgesehen, eine Relativbewegung des Passagiers relativ zu einem Sitzgestell des Flugzeugsitzes und/oder eine Relativbewegung des Passagiers relativ zu einem Kabinenboden, auf dem der Flugzeugsitz aufgeständert ist, zuzulassen. Grundsätzlich ist es ebenso denkbar, dass die Freigabeeinrichtung dazu vorgesehen ist, eine Bewegung eines Teils des Flugzeugsitzes zusammen mit dem Passagier relativ zu dem Kabinenboden zuzulassen. Dadurch kann vorteilhaft eine in einem Crashfall auf einen Passagier und/oder einen Crashtestdummy wirkende Kraft und/oder Beschleunigung positiv beeinflusst, insbesondere reduziert werden.

Es wird weiterhin vorgeschlagen, dass die Freigabeeinrichtung dazu vorgesehen ist, eine Schwenkbewegung einer Rückenlehne freizugeben. Unter einer "Schwenkbewegung der Rückenlehne" soll dabei insbesondere eine Schwenkbewegung der Rückenlehne um eine Rotationsachse, über die die Rückenlehne an die Aufständereinheit des Flugzeugsitzes angebunden ist, verstanden werden. Die Rückenlehne wird dabei bei einer Schwenkbewegung relativ zu der Aufständereinheit und/oder dem Sitzboden bewegt. Dadurch kann die Rückenlehne in einem Crashfall und/oder einem Prüfcrashfall besonders vorteilhaft verschwenkt werden, um einen besonders vorteilhaften Kontaktbereich zu erreichen.

Des Weiteren wird vorgeschlagen, dass die Freigabeeinrichtung zumindest einen Kraftbegrenzer, insbesondere einen Gurtkraftbegrenzer, aufweist, der dazu vorgesehen ist, eine in der Multipunktrückhalteeinheit wirkende Kraft zumindest teilweise zu begrenzen. Unter einem "Gurtkraftbegrenzer" soll dabei insbesondere eine Vorrichtung verstanden werden, die eine von der Multipunktrückhalteeinheit auf einen Passagier und/oder einen Crashtestdummy ausübbare Kraft, insbesondere in einem Crashfall und/oder in einem Prüfcrashfall, auf ein definiertes Maximum begrenzt. Dabei ist ein Gurtkraftbegrenzer insbesondere dazu vorgesehen, dass eine Nachgiebigkeit wenigstens eines Gurts der Multipunktrückhalteeinheit zumindest zeitweise und insbesondere ab einer definierten, auf den Gurt wirkenden Kraft, erhöht wird. Dadurch kann vorteilhaft eine Sicherheitsvorrichtung bereitgestellt werden, die insbesondere dazu vorgesehen ist, eine Kraft in der Multipunktrückhalteeinheit vorteilhaft gering zu halten.

Weiterhin wird vorgeschlagen, dass der Kraftbegrenzer dazu vorgesehen ist, ab einer Kraft von maximal 13 KN auszulösen. Dabei ist der Gurtkraftbegrenzer für einen Schultergurt dazu vorgesehen, bei einer Kraft von 2 KN bis 4KN auszulösen. Ein Gurtkraftbegrenzer für einen Beckengurt ist dazu vorgesehen, bei einer Kraft unterhalb von 13 KN, vorzugsweise bei einer Kraft unter 10 KN und in einer besonders vorteilhaften Ausgestaltung bei einer Kraft unter 9KN, auszulösen. Unter "auslösen" soll in diesem Zusammenhang verstanden werden, dass zumindest zeitweise eine Nachgiebigkeit eines Gurts der Multipunktrückhalteeinheit erhöht wird. Dadurch kann der Gurtkraftbegrenzer besonders vorteilhaft ausgebildet werden.

Außerdem wird vorgeschlagen, dass die Freigabeeinrichtung dazu vorgesehen ist, zumindest eine Beckenbewegung des Passagiers zuzulassen. Unter einer "Beckenbewegung" soll dabei insbesondere eine Bewegung eines Beckens oder eines Beckenbereichs eines Passagiers oder eines Crashtestdummys verstanden werden, die neben der normalen Bewegung des Beckens oder des Beckenbereichs insbesondere durch die Freigabeeinrichtung bedingt ist. Die durch die Freigabeeinrichtung bedingte Beckenbewegung ist dabei insbesondere größer als 1 cm, vorzugsweise größer als 8 cm und in einer besonders vorteilhaften Ausgestaltung größer als 14 cm. Dadurch kann vorteilhaft verhindert werden, dass ein Passagier in einem Crashfall eine zu große Relativbeschleunigung zwischen seinem Beckenbereich und seinem Kopfbereich erfährt.

Es wird weiter vorgeschlagen, dass die Freigabeeinrichtung zumindest ein Zerstörungselement, wie insbesondere eine Aufrissnaht in der Multipunktrückhalteeinheit, umfasst. Unter einem "Zerstörungselement" soll dabei insbesondere ein Element verstanden werden, das zu einer Freigabe wenigstens einer Bewegung wenigstens eines Elements dazu vorgesehen ist, zerstört zu werden. Dabei ist es denkbar, dass das Zerstörungselement als ein Deformationselement ausgebildet ist, das ab einer definierten auf das Zerstörungselement einwirkenden Kraft plastisch deformiert wird und so eine definierte Bewegung zulässt. Grundsätzlich ist es beispielsweise denkbar, dass das Deformationselement als eine Torsionswelle ausgebildet ist, die zur Freigabe einer Bewegung dazu vorgesehen ist, tordiert zu werden. Insbesondere ist das Zerstörungselement als eine Aufrissnaht in der Multipunktrückhalteeinheit ausgebildet. Dabei ist die Aufrissnaht dazu vorgesehen, in wenigstens einen Bereich, in dem ein Gurt der Multipunktrückhalteeinheit wellenförmig überlappend angeordnet ist, die wellenförmig überlappenden Bereiche des einen Gurts in einem Normalbetriebszustand direkt miteinander zu verbinden und bei einer entsprechenden, auf den Gurt wirkenden Kraft aufzureißen, wodurch die wellenförmig überlappenden Bereiche zueinander bewegt werden können. Die Aufrissnaht ist dazu vorgesehen, zwei Bereiche eines Gurts der Multipunktrückhalteeinheit in einer Dopplung in einem Normalbetriebszustand fest miteinander zu verbinden und ab einer definierten, auf den Gurt einwirkenden Kraft zu reißen, wodurch sich die Dopplung des Gurts lösen kann. Ein Aufreißen der Aufrissnaht gibt dabei insbesondere einen Weg von zumindest 1 cm bis 15 cm frei. Es ist denkbar, dass ein Gurt der Multipunktrückhalteeinheit ein oder mehrere als Aufrissnaht ausgebildete Zerstörungselemente aufweist oder dass ein oder mehrere als Aufrissnähte ausgebildete Zerstörungselemente in unterschiedlichen Gurten der Multipunktrückhalteeinheit angeordnet sind. Dabei ist es insbesondere auch denkbar, dass ein als Aufrissnaht ausgebildetes Zerstörungselement in einem Bereich angeordnet ist, in dem der Beckengurt mit dem Schultergurt gekoppelt ist. Grundsätzlich ist es ebenso denkbar, dass ein Zerstörungselement in Vorrichtungen und Strukturteilen der Flugzeugsitzvorrichtung integriert ist, vorzugsweise beispielsweise als Sollbruchstellen im Sitzteiler, wie insbesondere in einem Gurtanker, über den zumindest ein Gurt der Multipunktrückhalteeinheit an der tragenden Struktur des Flugzeugsitzes angebunden ist. Dadurch kann die Freigabeeinrichtung besonders vorteilhaft ausgebildet werden.

Zudem wird vorgeschlagen, dass die Freigabeeinrichtung wenigstens zwei Zerstörungselemente, insbesondere wenigstens zwei Aufrissnähte, aufweist, die dazu vorgesehen sind, bei unterschiedlichen Belastungen zerstört zu werden, insbesondere zu reißen. Darunter, dass die "Zerstörungselemente bei unterschiedlichen Belastungen zerstört werden", soll dabei insbesondere verstanden werden, dass ein erstes Zerstörungselement bei einer einwirkenden Kraft zerstört wird, die kleiner ist als eine Kraft, die auf das zweite Zerstörungselement einwirken muss, um dieses zu zerstören. Dadurch werden die wenigstens zwei Zerstörungselemente zumindest zu unterschiedlichen Zeitpunkten in einem Crashfall zerstört. Dadurch kann eine besonders vorteilhafte Freigabeeinrichtung bereitgestellt werden.

Weiter wird vorgeschlagen, dass die Freigabeeinrichtung wenigstens ein Flugzeugsitzanbindungselement aufweist, das dazu vorgesehen ist, in einem Crashfall eine Relativbewegung zu einem Kabinenboden zuzulassen. Unter einem Flugzeugsitzanbindungselement soll dabei insbesondere ein fest in einer Anbindungsschiene des Flugzeugs angebrachtes Element verstanden werden, das wenigstens einen zu dem Kabinenboden fixierten Teilbereich und einen zu dem fixierten Teilbereich zumindest in einem Betriebszustand, insbesondere in einem Crashfall, beweglichen Teilbereich aufweist, mit dem insbesondere eine Aufständereinheit, insbesondere Sitzfüße des Flugzeugsitzes, gekoppelt sind. Dabei wird mittels des Flugzeugsitzanbindungselements eine maximale Relativbewegung von 10 Inch zugelassen. Dadurch kann die Freigabeeinrichtung besonders vorteilhaft ausgebildet werden.

Ferner wird vorgeschlagen, dass die Freigabeeinrichtung wenigstens eine Neigungseinheit aufweist, die dazu vorgesehen ist, einen Flugzeugsitz in einem Prüfcrashfall nach vorne zu neigen. Unter einer "Neigungseinheit" soll dabei insbesondere eine Einheit verstanden werden, die wenigstens ein Lagermodul aufweist, das dazu vorgesehen ist, wenigstens ein Element, wie insbesondere einen Sitzboden und/oder eine Rückenlehne des Flugzeugsitzes, relativ zu einer Aufständerebene und/oder zu einer Aufständereinheit zu neigen. Dabei ist es denkbar, dass die Neigungseinheit dazu vorgesehen ist, lediglich den Sitzboden und/oder die Rückenlehne zu verschwenken, oder dass die Neigungsvorrichtung dazu vorgesehen ist, den Sitzboden und/oder die Rückenlehne zusammen mit der Aufständereinheit relativ zu der Aufständerebene zu verschwenken. Dadurch kann der Flugzeugsitz besonders sicher ausgebildet werden.

Es wird weiterhin vorgeschlagen, dass die Freigabeeinrichtung wenigstens eine in einem vorderen Sitzfuß angeordnete Dämpfungseinheit aufweist, die dazu vorgesehen ist, in einem Prüfcrashfall komprimiert zu werden. Unter einer "Dämpfungseinheit" soll dabei insbesondere eine Einheit verstanden werden, die wenigstens einen Dämpfer aufweist und dazu vorgesehen ist, eine Bewegung zweier beweglich zueinander gelagerter Elemente, wie beispielsweise zweier Teilbereiche eines Sitzfußes, in zumindest einer Richtung zu dämpfen. Ein Dämpfer kann dabei beispielsweise als eine Gasdruckfeder, eine Hydraulikfeder oder ein anderer, dem Fachmann als sinnvoll erscheinender Dämpfer ausgebildet sein. Dadurch kann die Aufständereinheit besonders vorteilhaft für einen Crashfall ausgebildet werden.

Des Weiteren wird vorgeschlagen, dass die Freigabeeinrichtung wenigstens eine in einem hinteren Sitzfuß angeordnete Dämpfungseinheit aufweist, die dazu vorgesehen ist, in einem Prüfcrashfall gestreckt zu werden. Dadurch kann vorteilhaft eine Neigung des Flugzeugsitzes in dem Prüfungscrashfall erreicht werden, wodurch eine Sicherheit erhöht wird.

Weiterhin wird vorgeschlagen, dass die Rückenlehne der Flugzeugsitzvorrichtung eine Biegesteifigkeit aufweist, aufgrund derer die Rückenlehne bei einer festen Anbindung an ihrem unteren Ende, insbesondere an einem Anbindungspunkt der Rückenlehne, und bei einer an einem oberen Ende angreifenden Kraft von 100 N in Sitzrichtung um 1 cm ausgelenkt wird. Insbesondere weist die Rückenlehne eine generische Rückenlehnensteifigkeit auf, die größer ist als 10 N/mm. Dadurch kann die Rückenlehne besonders vorteilhaft ausgebildet werden.

Ferner wird vorgeschlagen, dass die Sicherheitsvorrichtung wenigstens ein Anschlagselement aufweist, das dazu vorgesehen ist, einen maximalen Schwenkwinkel einer Rückenlehne zumindest in einem Crashfall durch eine direkte Abstützung an einem Teil einer Aufständereinheit oder eines Sitzteilers des Flugzeugsitzes zu begrenzen. Unter einem "Anschlagselement" soll dabei insbesondere ein Element verstanden werden, das dazu vorgesehen ist, durch einen Kontakt mit einem anderen verschwenkbaren Element, wie insbesondere der Rückenlehne, eine Verschwenkung auf einen maximalen Schwenkwinkel zu begrenzen und insbesondere bei Erreichen des maximalen Schwenkwinkels eine Kraft in eine Struktur, an der das Anschlagselement fest angebunden ist, direkt abzuleiten. Vorzugsweise ist das Anschlagselement fest mit einem Sitzteiler oder einer tragenden Struktur des Flugzeugsitzes verbunden. Insbesondere ist die Rückenlehne in einem Crashfall dazu vorgesehen, an dem Anschlagselement bei einer Verschwenkung mit einem oberen Ende in Sitzrichtung anzuschlagen. Das Anschlagselement ist vorzugsweise insbesondere dazu vorgesehen, eine Kraft, vorzugsweise insbesondere eine durch einen in dem Flugzeugsitz sitzenden Passagier über einen Schultergurt in die Rückenlehne eingeleitete Kraft, direkt von der Rückenlehne in den Sitzteiler des Flugzeugsitzes einzuleiten. Ein maximaler Schwenkwinkel der Rückenlehne kann dabei einer TTL-Stellung der Rückenlehne entsprechen oder einer aus der TTL-Stellung weiter nach vorne geschwenkten Stellung der Rückenlehne. Dadurch kann mittels der Sicherungsvorrichtung in einem Crashfall eine besonders vorteilhafte Abstützung einer durch den Schultergurt in die Rückenlehne eingeleitete Kraft erreicht werden.

Außerdem wird vorgeschlagen, dass die Sicherheitsvorrichtung wenigstens eine Energieumwandlungseinheit aufweist, die dazu vorgesehen ist, eine Bewegungsenergie eines Passagiers in einem Prüfcrashfall zumindest teilweise umzuwandeln. Die Energieumwandlungseinheit ist als Einheit definiert, die eine Bewegungsenergie in eine Wärmeenergie, eine Umformenergie oder eine andere, hier sinnvolle Energie umwandelt, um eine Bewegung insbesondere des Passagiers abzubremsen. Unter einer "Energieumwandlungseinheit" soll dabei insbesondere eine Einheit aus wenigstens einer Umwandlungseinheit verstanden werden, die in wenigstens einem Betriebszustand dazu vorgesehen ist, eine Energie, insbesondere eine Bewegungsenergie, aufzunehmen und/oder zu vernichten, um so einem anderen System, wie insbesondere einem Teil eines Flugzeugsitzes, beispielsweise einer Rückenlehne, Energie zu entziehen. Dabei ist die Energieumwandlungseinheit insbesondere dazu vorgesehen, auch Auftreffenergie, also Energie, die ein während eines Crashfalls und/oder Prüfcrashfalls auf einen Teil des Flugzeugsitzes auftreffender Passagier in den Flugzeugsitz einbringt, zumindest teilweise zu absorbieren, also insbesondere umzuwandeln. Dabei ist die Energieumwandlungseinheit vorzugsweise als eine Einheit ausgebildet, die durch plastische Verformung gedehnt wird und durch die plastische Verformung eine Energie vernichtet. Die Energieumwandlungseinheit ist als eine Einheit ausgebildet, die eine Bewegungsenergie durch plastische Verformung in Verformungsenergie, also Wärme, umwandelt. Dabei ist die Energieumwandlungseinheit vorzugsweise zumindest teilweise aus einem Metall gebildet und nimmt bei der Verformung Verformungsenergie auf. Dabei kann über eine Materialstärke, das Material und eine Form eines Verzögerungselements eine Kraft eingestellt werden, die nötig ist, um das Verzögerungselement zu verformen. Grundsätzlich ist es auch denkbar, dass die Energieumwandlungseinheit einen Hydraulik- oder einen Gasdruckzylinder aufweist, dessen Zylinderstange gegen den Druck eines Gases oder einer Flüssigkeit aus einem Gehäuse ausgefahren werden kann. Grundsätzlich ist es auch denkbar, dass die Energieumwandlungseinheit durch wenigstens zwei Kammern gebildet ist, die durch wenigstens eine mit wenigstens einem Durchgangsloch versehene Blende voneinander getrennt sind, wobei ein Fluid zur Verzögerung durch die Durchgangslöcher der Blende gedrückt wird. Grundsätzlich ist es ebenfalls denkbar, dass die Energieumwandlungseinheit wenigstens ein Element aufweist, das dazu vorgesehen ist, zur Verzögerung eines anderen Elements zerstört zu werden, um dadurch Energie abzubauen. Dadurch kann vorteilhaft eine Bewegungsenergie des Passagiers in einem Crashfall vorteilhaft abgebaut bzw. umgewandelt werden und so ein Verletzungsrisiko für den Passagier verringert werden.

Es wird weiter vorgeschlagen, dass die Energieumwandlungseinheit zumindest zwei zumindest teilweise hintereinander geschaltete Umwandlungseinheiten aufweist. Unter "zumindest teilweise hintereinander geschaltet" soll dabei insbesondere verstanden werden, dass die Umwandlungseinheiten bei unterschiedlichen Kräften auslösen und so zu unterschiedlichen Zeitpunkten während eines Crashfalls auslösen und dabei entweder komplett separat voneinander aktiv sind oder zumindest teilweise zeitgleich aktiv sind. Dadurch kann die Energieumwandlungseinheit besonders vorteilhaft ausgebildet werden.

Zudem wird vorgeschlagen, dass die Energieumwandlungseinheit dazu vorgesehen ist, eine Bewegungsenergie eines Passagiers in einem Prüfcrashfall nach einer Bewegungsfreigabe durch eine Freigabeeinrichtung zumindest teilweise umzuwandeln. Unter einer "nach einer Bewegungsfreigabe durch eine Freigabeeinrichtung" soll dabei insbesondere zeitlich nach einer Bewegungsfreigabe verstanden werden. Dadurch kann eine durch die Freigabeeinrichtung zugelassene Bewegung des Passagiers und/oder eines Teils des Flugzeugsitzes vorteilhaft gedämpft werden.

Weiter wird vorgeschlagen, dass die Energieumwandlungseinheit dazu vorgesehen ist, eine Rotation eines Passagiers in einem Prüfcrashfall zu bewirken. Unter einer "Rotation des Passagiers" soll dabei insbesondere eine Rotation des Passagiers oder eines Crashtestdummys um eine Vertikalachse verstanden werden, wodurch insbesondere eine Bewegung und dadurch ein Auftreffbereich, in dem der Passagier oder Crashtestdummy auf einer vorgelagerten Einheit aufkommt, vorteilhaft beeinflusst und gezielt gesteuert werden kann. Dadurch kann eine Bewegung eines Passagiers oder eines Crashtestdummys während eines Crashfalls besonders vorteilhaft beeinflusst werden, um eine Verletzungsgefahr zu verringern.

Ferner wird vorgeschlagen, dass die Energieumwandlungseinheit wenigstens eine Rotationseinheit umfasst, die dazu vorgesehen ist, einen Sitzboden eines Flugzeugsitzes in einem Prüfcrashfall zumindest teilweise zu rotieren. Unter einer "Rotationseinheit" soll dabei insbesondere eine Einheit verstanden werden, die dazu vorgesehen ist, eine Rotation des Sitzbodens relativ zu der Aufständerebene, auf der der Flugzeugsitz aufgeständert ist, zu verdrehen. Dabei ist es denkbar, dass die Rotationseinheit dazu vorgesehen ist, den Sitzboden relativ zu der Aufständereinheit zu verdrehen, oder dass die Rotationseinheit den Sitzboden zusammen mit zumindest einem Teil der Aufständereinheit relativ zu der Aufständerebene verdreht. Dadurch kann die Energieumwandlungseinheit besonders vorteilhaft eine Bewegungsenergie umwandeln und besonders vorteilhaft eine Ausrichtung des Passagiers relativ zu einer vorgelagerten Einheit, auf der der Passagier auftrifft, während des Crashfalls verändern.

Es wird weiterhin vorgeschlagen, dass die Energieumwandlungseinheit dazu vorgesehen ist, eine Körperkinematik des Passagiers zur Reduzierung einer Kopfgeschwindigkeit und/oder einer Auftreffgeschwindigkeit auf einer vorgelagerten Einheit in einem Prüfcrashfall zu bewirken. Unter eine "Körperkinematik zur Reduzierung einer Kopfgeschwindigkeit und/oder einer Auftreffgeschwindigkeit bewirken" soll dabei insbesondere verstanden werden, dass die Energieumwandlungseinheit durch eine entsprechende Bewegung ihrer Elemente eine Bewegung des Passagiers und/oder des Crashtestdummys so beeinflusst, dass insbesondere eine Bewegung einer Hüfte oder eines Hüftbereichs des Passagiers oder des Crashtestdummys nach vorne und eine starke Beschleunigung des Oberkörpers des Passagiers oder des Crashtestdummys, insbesondere durch einen Peitscheneffekt, verhindert werden können. Dadurch kann eine Verletzungsgefahr in einem Crashfall besonders vorteilhaft weiter reduziert werden.

Des Weiteren wird vorgeschlagen, dass die Energieumwandlungseinheit einen Sitzboden und/oder ein Sitzpolster aufweist, der/das dazu vorgesehen ist, durch Deformation eine Bewegungsenergie umzuwandeln. Dadurch kann die Energieumwandlungseinheit besonders einfach in den Flugzeugsitz eingebunden werden.

Weiterhin wird vorgeschlagen, dass die Multipunktrückhalteeinheit einen von dem Beckengurt abnehmbaren Schultergurt aufweist. Unter einem "abnehmbaren Schultergurt" soll dabei insbesondere verstanden werden, dass der Schultergurt in einem Nicht-Gebrauchszustand von dem Beckengurt und/oder mit dem Flugzeugsitz zerstörungsfrei trennbar ausgestaltet ist. Dabei ist der Schultergurt über Kopplungselemente für einen Gebrauchszustand fest mit dem Beckengurt und/oder von dem Flugzeugsitz verbindbar, wobei eine Verbindung zwischen dem Schultergurt und dem Beckengurt und/oder dem Flugzeugsitz so ausgebildet ist, dass Lasten in einem Normalbetriebszustand und in einem Crashfall über sie übertragbar sind. Der "abnehmbare Schultergurt" ist insbesondere dazu vorgesehen, dass er bei Nichtgebrauch zumindest von dem Beckengurt, vorzugsweise komplett von dem Flugzeugsitz, gelöst werden kann, um ihn verstauen zu können. Dadurch kann die Multipunktrückhalteeinheit besonders vorteilhaft ausgebildet werden.

Außerdem wird vorgeschlagen, dass die Sicherheitsvorrichtung wenigstens eine Straffeinheit aufweist, die zumindest in einem Prüfcrashfall dazu vorgesehen ist, die Multipunktrückhalteeinheit zumindest teilweise zu straffen. Unter einer "Straffeinheit" soll dabei insbesondere eine Einheit verstanden werden, die in einem Auslösefall, insbesondere in einem Crashfall, dazu vorgesehen ist, ein Element, wie insbesondere einen Gurt, wie insbesondere den Beckengurt und/oder den Schultergurt der Multipunktrückhalteeinheit, zu straffen, insbesondere indem eine Spannung in dem Beckengurt und/oder dem Schultergurt erhöht wird. Dadurch kann eine Sicherheit durch die Multipunktrückhalteeinheit vorteilhaft weiter erhöht werden.

Es wird weiter vorgeschlagen, dass die Straffeinheit dazu vorgesehen ist, einen Beckengurt der Multipunktrückhalteeinheit durch einen Schultergurt der Multipunktrückhalteeinheit zu spannen. Darunter, dass der "Beckengurt durch den Schultergurt gespannt wird", soll dabei insbesondere verstanden werden, dass der Beckengurt durch eine Bewegung des Schultergurts, vorzugsweise durch eine durch eine Beschleunigung des Passagiers hervorgerufene Bewegung des Schultergurts, gespannt wird. Dazu ist der Schultergurt zusätzlich zu der direkten Kopplung mit dem Beckengurt zusätzlich mittels eines Spannelements mit dem Beckengurt verbunden, das eine Bewegung des Schultergurts in eine Spannbewegung des Beckengurts umwandelt. Dadurch kann der Beckengurt der Multipunktrückhalteeinheit besonders einfach gespannt werden.

Zudem wird vorgeschlagen, dass die Straffeinheit dazu vorgesehen ist, die Multipunktrückhalteeinheit durch eine Relativbewegung zu einem Kabinenboden zu spannen. Dadurch kann die Multipunktrückhalteeinheit besonders vorteilhaft gespannt werden.

Weiter wird vorgeschlagen, dass die Anbindungseinheit der Sicherheitsvorrichtung dazu vorgesehen ist, einen Anbindungspunkt eines Schultergurts der Multipunktrückhalteeinheit während eines Prüfcrashfalls zu verschieben. Unter einer "Anbindungseinheit" soll dabei insbesondere eine Einheit verstanden werden, die wenigstens einen Anbindungspunkt für den Schultergurt ausbildet, über den der Schultergurt in einem oberen Bereich der Rückenlehne fest an den Flugzeugsitz angebunden ist, wobei ein Anbindungspunkt entlang einer Verschiebebahn in einer Position zu der Rückenlehne veränderbar ist. Der Anbindungspunkt ist dabei in einem Normalbetrieb vorzugsweise in einem Normalbetriebsanbindungsbereich fixiert und wird lediglich in einem Crashfall, insbesondere auch einem Prüfcrashfall, insbesondere ab einer definierten Beschleunigung, die auf den Flugzeugsitz wirkt, von dem Normalbetriebsanbindungsbereich in einen Crashfallanbindungsbereich verschoben. Dadurch kann eine Sicherung des Passagiers oder Crashtestdummys in einem Crashfall besonders vorteilhaft ausgeführt werden.

Ferner wird vorgeschlagen, dass die Anbindungseinheit dazu vorgesehen ist, den Anbindungspunkt des Schultergurts um wenigstens 5 cm zu bewegen. Unter zumindest "5 cm bewegen" soll dabei insbesondere verstanden werden, dass der Anbindungspunkt in einem Crashfall zwischen dem Normalbetriebsanbindungsbereich und einer Endposition in dem Crashfallanbindungsbereich um einen Weg von wenigstens 5 cm, vorzugsweise von wenigstens 8 cm und in einer besonders vorteilhaften Ausgestaltung von wenigstens 10 cm, entlang einer Verschiebebahn verschoben wird. Die Verschiebebahn der Anbindungseinheit kann dabei vorzugsweise linear ausgebildet sein. Grundsätzlich ist es auch denkbar, dass die Verschiebebahn einen gekrümmten Verlauf aufweist. Es ist insbesondere auch denkbar, dass die Verschiebebahn lediglich in einer Richtung parallel zu einer Aufständerebene ausgerichtet ist, lediglich in einer orthogonal zur Aufständerebene ausgerichteten Richtung ausgerichtet ist oder dass die Verschiebebahn sowohl parallel als auch geneigt zur Aufständerebene verläuft. Dadurch kann die Anbindungseinheit besonders vorteilhaft ausgebildet werden.

Es wird weiterhin vorgeschlagen, dass der Anbindungspunkt dazu vorgesehen ist, nach unten in Richtung Aufständerebene bewegt zu werden. Dadurch kann eine durch den Schultergurt in die Rückenlehne eingeleitete Kraft besonders vorteilhaft eingeleitet werden, insbesondere ein Hebelarm der eingeleiteten Kraft kann dadurch in einem Crashfall vorteilhaft verkleinert werden.

Des Weiteren wird vorgeschlagen, dass die Flugzeugsitzvorrichtung einen Sitzboden aufweist, der wenigstens an einem vorderen Ende ein Spoilerelement aufweist, das dazu vorgesehen ist, ein Durchrutschen eines Passagiers zwischen dem Sitzboden und der Multipunktrückhalteeinheit zu verhindern. Unter einem "Spoilerelement" soll dabei insbesondere ein Element verstanden werden, das eine Erhöhung ausbildet und dadurch den Sitzboden an seinem vorderen Ende, insbesondere in einer von der Aufständerebene weggerichteten Richtung, erhöht. Dabei ist denkbar, dass sich das Spoilerelement über eine gesamte Breite des Sitzbodens erstreckt, lediglich in Teilbereichen des Sitzbodens angeordnet ist oder an unterschiedlichen Stellen des Sitzbodens unterschiedliche Höhen aufweist. Das Spoilerelement ist dabei von einem Sitzpolster und/oder einer Sitzpfanne des Sitzbodens ausgeformt. Dadurch kann der Passagier in einem Crashfall besonders sicher in dem Flugzeugsitz gehalten werden.

Weiterhin wird vorgeschlagen, dass die Flugzeugsitzvorrichtung eine Rückenlehne aufweist, die einen Drehpunkt aufweist, der wenigstens 1 cm oberhalb eines tiefsten Punkts eines Sitzbodens liegt. Unter einem "tiefsten Punktes des Sitzbodens" soll dabei insbesondere ein Punkt, der auf der Sitzfläche des Sitzbodens angeordnet ist, verstanden werden, der einen geringsten Abstand zu der Aufständerebene aufweist. Insbesondere soll unter dem tiefsten Punkt die Einsitztiefe des Sitzbodens verstanden werden.

Dadurch kann die Rückenlehne besonders vorteilhaft für eine Sicherheit angelenkt werden.

Außerdem wird vorgeschlagen, dass eine Rückenlehne einen unteren Bereich aufweist, der in einem Prüfcrashfall dazu vorgesehen ist, entgegen einer Sitzrichtung bewegt zu werden. Unter einem "unteren Bereich" soll dabei insbesondere ein Bereich der Rückenlehne verstanden werden, der unterhalb eines Anlenkpunkts der Rückenlehne angeordnet ist. Dadurch kann die Rückenlehne besonders vorteilhaft angebunden werden.

Es wird weiter vorgeschlagen, dass die Sicherheitsvorrichtung dazu vorgesehen ist, eine Kopfauftreffgeschwindigkeit auf eine vorgelagerte Einheit in einem Prüfcrashfall auf weniger als 10 m/s und insbesondere auf weniger als 6 m/s zu begrenzen. Unter einer "Kopfauftreffgeschwindigkeit" soll dabei insbesondere eine Geschwindigkeit eines Kopfs des Passagiers oder Crashtestdummys unmittelbar vor dem Auftreffen auf der vorgelagerten Einheit verstanden werden. Die Kopfauftreffgeschwindigkeit ist insbesondere die Relativgeschwindigkeit zwischen dem Kopf des Passagiers oder Crashtestdummys und der vorgelagerten Einheit unmittelbar vor dem Moment des Auftreffens des Kopfs auf der vorgelagerten Einheit. Unter "weniger als 10 m/s" soll dabei insbesondere weniger als 10 m/s, vorzugsweise weniger als 8 m/s und in einer besonders vorteilhaften Ausgestaltung weniger als 6 m/s verstanden werden. Dadurch kann die Sicherheitsvorrichtung besonders sicher für einen Passagier ausgebildet werden.

Zudem wird vorgeschlagen, dass die Sicherheitsvorrichtung für einen Economy-Flugzeugsitz vorgesehen ist. Unter einem "Economy-Flugzeugsitz" soll dabei insbesondere ein Flugzeugsitz verstanden werden, der in einer Economyklasse angeordnet ist und dabei vorzugsweise als ein Teil einer Flugzeugsitzreihe aus wenigstens zwei Flugzeugsitzen ausgebildet ist. Dabei weist ein als Economy-Flugzeugsitz ausgebildeter Flugzeugsitz vorzugsweise einen Sitzboden und/oder eine Rückenlehne auf, die zwischen einer aufrechten Sitzstellung (TTL-Position) und einer geneigten Komfortstellung (Recline-Position) verstellbar sind. Grundsätzlich ist es auch denkbar, dass der Flugzeugsitz als ein Premium-Economy-Flugzeugsitz ausgebildet ist, der insbesondere einen größeren Sitzbereich für einen Passagier bereitstellt, wie insbesondere eine Sitzbreite von im Wesentlichen 600 mm. Dadurch kann der Flugzeugsitz besonders vorteilhaft ausgebildet werden.

Weiter wird vorgeschlagen, dass die Sicherheitsvorrichtung für einen Flugzeugsitz vorgesehen ist, der unter 10 kg wiegt. Unter einem Gewicht des Flugzeugsitzes soll dabei insbesondere ein Gewicht des Flugzeugsitzes mit all den Anbauteilen, die in einem voll montierten Zustand an dem Flugzeugsitz angebracht sind, wie insbesondere auch ein Monitor, eine anklappbare Tischeinheit und andere, dem Fachmann als sinnvoll erscheinende Anbauteile verstanden werden. Dadurch kann vorteilhaft leichter Flugzeugsitz bereitgestellt werden.

Ferner wird vorgeschlagen, dass die Sicherheitsvorrichtung für einen Flugzeugsitz mit einer verschwenkbaren Rückenlehne vorgesehen ist. Unter einer "verschwenkbaren Rückenlehne" soll dabei insbesondere eine Rückenlehne verstanden werden, die zwischen einer im Wesentlichen aufrechten Sitzstellung und einer geneigten Komfortstellung um eine Schwenkachse verschwenkt werden kann, wobei die Rückenlehne dabei vorzugsweise stufenlos zwischen der Sitzstellung und der Komfortstellung arretierbar ist. Dadurch kann die Sicherheitsvorrichtung besonders vorteilhaft ausgestaltet werden.

Nach Anspruch 1 weist Sicherheitsvorrichtung eine Anbindungseinheit mit wenigstens einem Anbindungspunkt für den Schultergurt auf, wobei der Anbindungspunkt auf einer Seite einer Rückenlehne angeordnet ist, die in Querrichtung einen kürzeren Abstand zu einem Sitzfuß aufweist als eine gegenüberliegende Seite der Rückenlehne. Erfindungsgemäss sind alle Anbindungspunkte für Schultergurte von Flugzeugsitzen einer Sitzreihe jeweils auf einer Seite der jeweiligen Rückenlehne angeordnet, die in Querrichtung einen kürzeren Abstand zu einem Sitzfuß aufweist als eine gegenüberliegende Seite der entsprechenden Rückenlehne. Vorzugsweise sind die Anbindungspunkte für einen Schultergurt auf einer Seite einer Rückenlehne angeordnet, die einen kürzesten Abstand zu einem Sitzfuß aufweist, oder direkt einem Sitzfuß zugewandt ist. Dadurch kann der Anbindungspunkt vorteilhaft nah an dem Sitzfuß angeordnet werden und dadurch vorteilhaft eine besonders vorteilhafte Krafteinleitung für über den Schultergurt in den Flugzeugsitz eingeleitete Kräfte erreicht werden.

Es wird weiterhin vorgeschlagen, dass die Sicherheitsvorrichtung als ein Nachrüstsatz ausgebildet ist. Unter einem "Nachrüstsatz" soll dabei insbesondere eine Vorrichtung verstanden werden, die in bestehende Flugzeugsitze eingebaut werden kann, ohne dass diese umgebaut und/oder neu zugelassen werden müssen. Dadurch kann die Sicherheitsvorrichtung besonders vorteilhaft flexibel auch für ältere Flugzeugsitzmodelle eingesetzt werden.

Des Weiteren wird vorgeschlagen, dass die Sicherheitsvorrichtung zumindest eine Kommunikationseinheit aufweist, die dazu vorgesehen ist, mit wenigstens einer weiteren Kommunikationseinheit, insbesondere mit einer Kommunikationseinheit einer weiteren Flugzeugsitzvorrichtung, zu kommunizieren. Unter einer "Kommunikationseinheit" soll dabei insbesondere eine Einheit verstanden werden, die zu einem direkten Austausch von Daten mit wenigstens einer weiteren Kommunikationseinheit vorgesehen ist, wobei die Kommunikationseinheiten insbesondere dazu vorgesehen sind, die Daten an eine Recheneinheit weiterzuleiten, wobei die Recheneinheit insbesondere dazu vorgesehen ist, die entsprechenden Daten zu verarbeiten. Unter einer "Recheneinheit" soll insbesondere eine Einheit mit einem Informationseingang, einer Informationsverarbeitung und einer Informationsausgabe verstanden werden. Vorteilhaft weist die Recheneinheit zumindest einen Prozessor, einen Speicher, Ein- und Ausgabemittel, weitere elektrische Bauteile, ein Betriebsprogramm, Regelroutinen, Steuerroutinen und/oder Berechnungsroutinen auf. Vorzugsweise sind die Bauteile der Recheneinheit auf einer gemeinsamen Platine angeordnet und/oder vorteilhaft in einem gemeinsamen Gehäuse angeordnet. Vorzugsweise ist es denkbar, dass die Kommunikationseinheit zur Kommunikation mit zumindest einem pyrotechnischen Element der Sicherheitsvorrichtung vorgesehen ist, das beispielsweise zur Auslösung eines Airbags vorgesehen ist. Dadurch kann die Sicherheitsvorrichtung vorteilhaft so ausgebildet werden, dass sie direkt und insbesondere ohne Leitung über eine Bordelektronik eines Flugzeuges mit anderen Flugzeugsitzen kommunizieren kann und so sicherheitsrelevante Daten vorteilhaft ausgetauscht werden können.

Weiterhin wird vorgeschlagen, dass die Kommunikationseinheit zumindest dazu vorgesehen ist, eine Information über einen Belegungszustand eines Flugzeugsitzes zu empfangen und/oder zu versenden. Unter einem "Belegungszustand eines Flugzeugsitzes" soll dabei insbesondere ein Zustand verstanden werden, der in Abhängigkeit, ob ein Passagier auf einem Flugzeugsitz sitzt oder ob der Flugzeugsitz frei ist, einen unterschiedlichen Wert annimmt. Dadurch kann vorteilhaft erfasst werden, ob ein Passagier auf einem Flugzeugsitz sitzt, so dass ein Verhalten der Sicherheitsvorrichtung in einem Crashfall vorteilhaft eingestellt werden kann.

Außerdem wird vorgeschlagen, dass die Sicherheitsvorrichtung wenigstens eine Einstelleinheit aufweist, die dazu vorgesehen ist, in Abhängigkeit von wenigstens einem Belegungszustand eines Flugzeugsitzes wenigstens einen Crashparameter einzustellen. Unter einer "Einstelleinheit" soll dabei insbesondere eine Einheit verstanden werden, die dazu vorgesehen ist, durch Verstellung wenigstens eines Elements oder Bauteils der Sicherheitsvorrichtung ein Verhalten eines Flugzeugsitzes in einem Crashfall zu verändern. Die Sicherheitsvorrichtung kann dazu vorgesehen sein, spezielle Vorrichtungen und/oder Einrichtungen der Sicherheitsvorrichtung, wie beispielsweise eine Freigabeeinrichtung, in Abhängigkeit eines Belegungszustandes zu aktivieren oder zu sperren. Dadurch kann eine Sicherheit insbesondere weiter erhöht werden.

Es wird weiter vorgeschlagen, dass die Sicherheitsvorrichtung dazu vorgesehen ist, variabel einen Freiraum, wie insbesondere einen durch eine Verschiebung eines Sitzes bedingten Freiraum, zu nutzen. Dadurch kann vorteilhaft eine Bewegung des Sitzes während eines Crashfalls vorteilhaft genutzt werden, um wenigstens eine Einheit oder eine Einrichtung der Sicherheitsvorrichtung zu nutzen.

Zudem wird vorgeschlagen, dass die Sicherheitsvorrichtung für einen Businessclass-Flugzeugsitz vorgesehen ist. Unter einem "Businessclass-Flugzeugsitz" soll dabei insbesondere ein Flugzeugsitz mit einem entsprechenden Flugzeugsitzbereich verstanden werden, der für eine Businessklasse in einem Flugzeug vorgesehen ist und dazu vorzugsweise in eine volle Liegeposition verfahren werden kann. Dadurch kann der Flugzeugsitz vorteilhaft ausgebildet werden.

Weiter wird vorgeschlagen, dass die Sicherheitsvorrichtung dazu vorgesehen ist, eine durch ein Aktuatorenspiel/Auslösespiel ausgelöste Bewegung zumindest eines Teils eines Flugzeugsitzes in einem Crashfall zu nutzen, insbesondere für eine Auslösung eines Gurtstraffers. Unter einem "Aktuatorenspiel" soll dabei insbesondere ein Bewegungsfreiraum verstanden werden, der insbesondere durch ein Spiel in Aktuatoren, die zur Verstellung von unterschiedlichen Elementen des Flugzeugsitzes, wie beispielsweise einer Rückenlehne, eines Sitzbodens oder einer Fußstütze vorgesehen sind, in einem Crashfall entsteht, indem zueinander bewegliche Elemente eines Aktuators durch die in einem Crashfall wirkenden Kräfte sich zueinander bewegen, wodurch sich insbesondere auch die entsprechenden mit dem Aktuator gekoppelten Bauteile des Flugzeugsitzes mit bewegen. Dadurch kann eine durch eine Bauweise des Flugzeugsitzes bedingte Bewegungsfreiheit in einem Crashfall zu einer Betätigung wenigstens eines Sicherheitsfeatures der Sicherheitsvorrichtung genutzt werden.

Ferner wird vorgeschlagen, dass eine Seite der Rückenlehne, die an einen Anbindungspunkt für den Schultergurt angebunden ist, verstärkt ausgebildet ist. Unter "verstärkt ausgebildet" soll insbesondere im Unterschied zu der gegenüberliegenden Seite der Rückenlehne, an der die Multipunktrückhalteeinheit nicht angebunden ist, "verstärkt" verstanden werden. Dabei ist unter "verstärkt" insbesondere zu verstehen, dass die Seite durch konstruktive Maßnahmen insbesondere eine höhere Steifigkeit aufweist. Die Verstärkung kann dabei insbesondere durch eine Erhöhung einer Materialstärke, eine Anbindung von zusätzlichen Versteifungselementen oder die Anbringung von Verstärkungseinlegern in ein Schalenelement erfolgen. Dadurch kann die Rückenlehne besonders vorteilhaft steif und gleichzeitig leicht ausgebildet werden, wobei insbesondere durch die Multipunktrückhalteeinheit in die Rückenlehne eingeleitete Kräfte betriebssicher in die Aufständereinheit abgeleitet werden können.

Die erfindungsgemäße Flugzeugsitzvorrichtung soll hierbei nicht auf die oben beschriebene Anwendung und Ausführungsform beschränkt sein. Insbesondere kann die erfindungsgemäße Flugzeugsitzvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer erfindungsgemäßen Flugzeugsitzvorrichtung in einem ersten Ausführungsbeispiel, mit einer an einem als Economy- Flugzeugsitz ausgebildeten Flugzeugsitz angeordneten Sicherheitsvorrichtung,
- Fig. 2: eine schematische Darstellung eines Flugzeugsitzes mit der erfindungsgemäßen Sicherheitsvorrichtung während eines Prüfcrashfalls mit einer vorgelagerten Einheit,
- Fig. 3: eine schematische Darstellung eines Teils insbesondere einer Grundstruktur einer Flugzeugsitzreihe,
- Fig. 4: eine schematische Darstellung einer als Rückenlehne ausgebildeten vorgelagerten Einheit,
- Fig. 5: eine schematische Darstellung eines Teils eines Flugzeugsitzes mit einer Sicherheitsvorrichtung, die eine Multipunktrückhalteeinheit umfasst,
- Fig. 6: eine weitere schematische Darstellung eines Teils eines Flugzeugsitzes mit einer Sicherheitsvorrichtung, die eine Multipunktrückhalteeinheit umfasst,
- Fig. 7: eine schematische Darstellung eines Gurts der Multipunktrückhalteeinheit mit einem als Aufrissnaht ausgebildeten Zerstörungselement in zwei Zuständen
- Fig. 8: eine schematische Darstellung eines Teils einer Rückenlehne und eines Sitzteilers eines Flugzeugsitzes mit einem Anschlagselement und
- Fig. 9: eine schematische Darstellung einer erfindungsgemäßen Flugzeugsitzvorrichtung in einem zweiten Ausführungsbeispiel, mit einem als Businessclass-Flugzeugsitz ausgebildeten Flugzeugsitz.

### Beschreibung der Ausführungsbeispiele

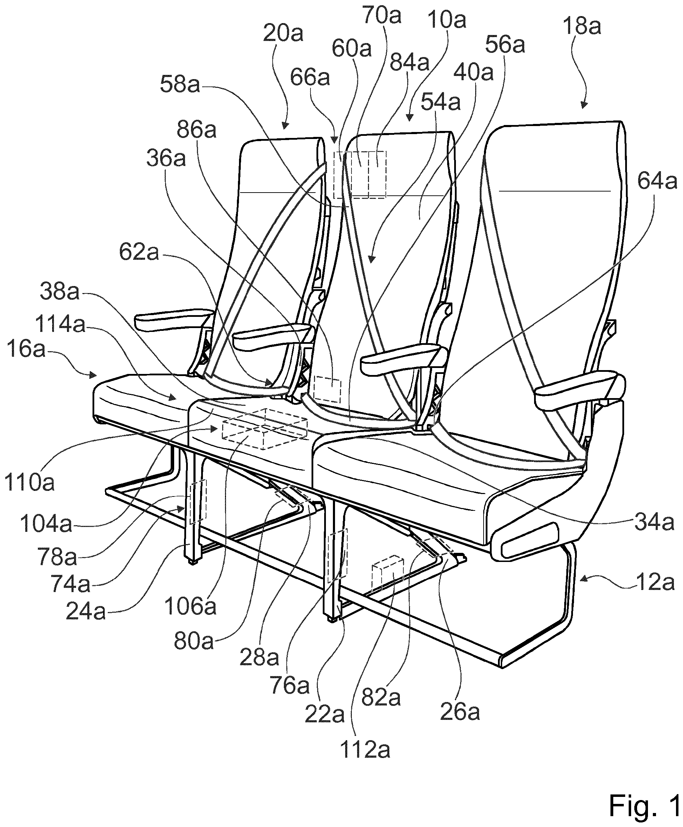

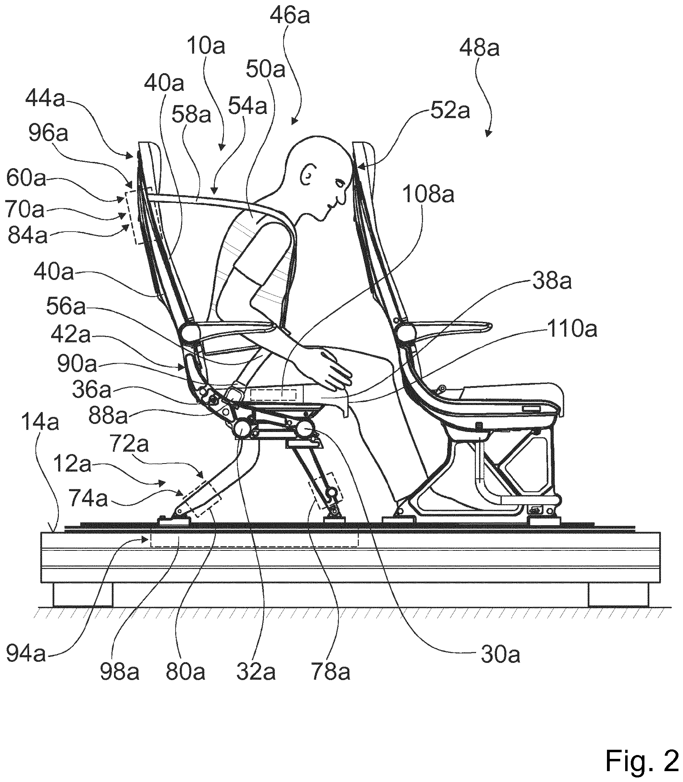

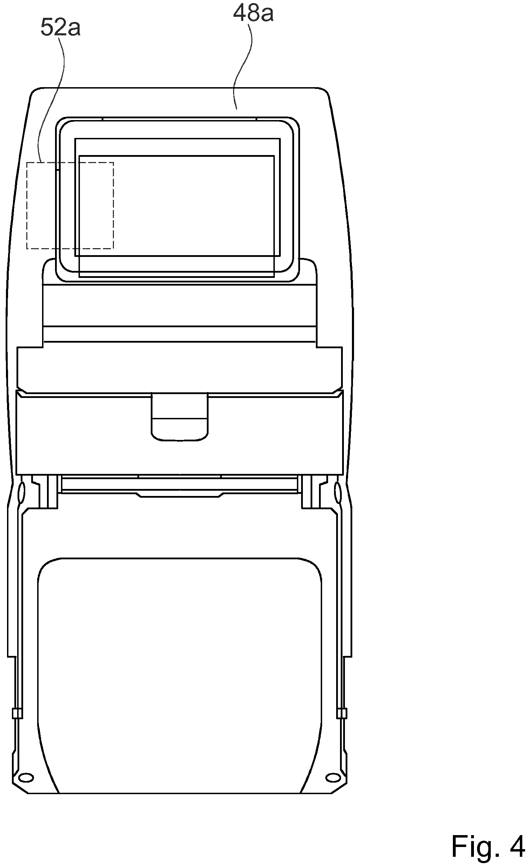

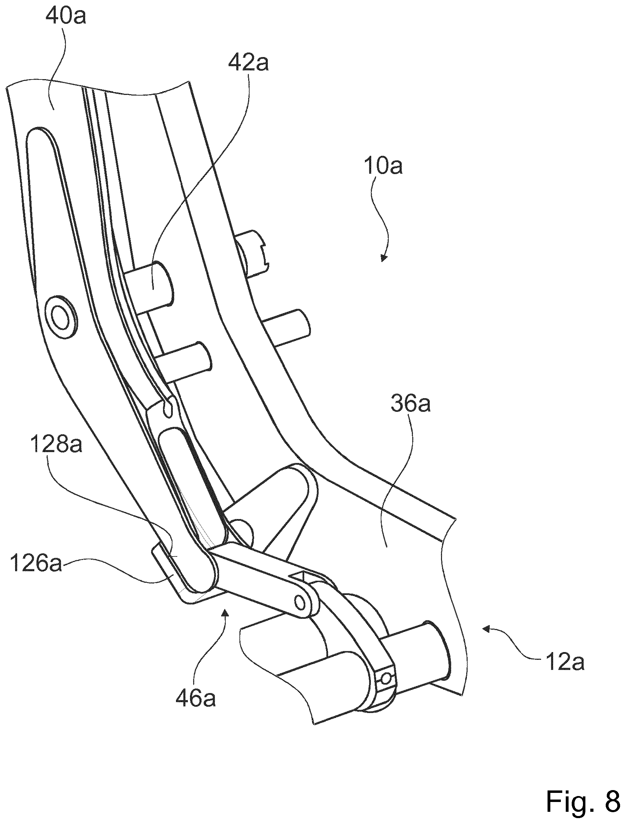

Die Figuren 1 bis 8 zeigen ein erstes Ausführungsbeispiel einer erfindungsgemäßen Flugzeugsitzreihe mit drei Flugzeugsitzen, mit jeweils einer Flugzeugsitzvorrichtung. Die Flugzeugsitzvorrichtung ist dabei Teil eines Flugzeugsitzes 10a. Der Flugzeugsitz 10a ist als ein Economy-Flugzeugsitz ausgebildet. Grundsätzlich ist es auch denkbar, dass der Flugzeugsitz als ein Premium-Economy-Flugzeugsitz ausgebildet ist. Der Flugzeugsitz 10a ist dazu vorgesehen, in einem nicht näher dargestellten Flugzeug aufgeständert zu werden. Der Flugzeugsitz ist dabei in einem montierten Zustand in einer Flugzeugkabine des Flugzeugs aufgeständert. Dazu weist der Flugzeugsitz 10a eine Aufständereinheit 12a auf. Mittels der Aufständereinheit 12a ist der Flugzeugsitz 10a auf einer Aufständerebene 14a aufständerbar. Die Aufständerebene 14a ist dabei von einem Boden einer Flugzeugkabine ausgebildet. Grundsätzlich ist es auch denkbar, dass die Aufständerebene 14a von einem Testschlitten einer Testvorrichtung ausgebildet ist, mittels der der Flugzeugsitz in einem Prüfcrashtest getestet wird. Der Flugzeugsitz 10a ist als ein Economy-Flugzeugsitz ausgebildet. Der Flugzeugsitz 10a ist als Teil einer Flugzeugsitzreihe 16a ausgebildet. Der Flugzeugsitz 10a ist dabei als ein Teil einer erfindungsgemässen

Flugzeugsitzreihe 16a ausgebildet, die drei zumindest im Wesentlichen gleich ausgebildete Flugzeugsitze 10a, 18a, 20a umfasst. Die Flugzeugsitze 10a, 18a, 20a sind dabei im Wesentlichen gleich ausgebildet, weswegen im Folgenden lediglich der Flugzeugsitz 10a näher beschrieben wird. Der Flugzeugsitz 10a ist als ein mittlerer Sitz ausgebildet. Mittels der Aufständereinheit 12a sind alle Flugzeugsitze 10a, 18a, 20a der Flugzeugsitzreihe 16a auf der Aufständerebene 14a aufgeständert. Die Aufständereinheit 12a ist dazu vorgesehen, den Flugzeugsitz 10a über nicht näher dargestellte Anbindungsschienen fest auf der Aufständerebene 14a anzubinden. Dabei sind die Anbindungsschienen vorzugsweise in einen Kabinenboden einer Flugzeugkabine integriert. Zur Anbindung auf einem Testschlitten können die Anbindungsschienen auch fest an einem Anbindungsbereich des Testschlittens angeordnet sein.

Die Aufständereinheit 14a weist zwei vordere Sitzfüße 22a, 24a und zwei hintere Sitzfüße 26a, 28a auf. Je ein vorderer Sitzfuß 22a, 24a und ein hinterer Sitzfuß 26a, 28a sind als ein Paar ausgebildet und gemeinsam in derselben Anbindungsschiene angeordnet. Grundsätzlich ist es dabei auch denkbar, dass die als Paar ausgebildeten vorderen Sitzfüße 22a, 24a und hinteren Sitzfüße 26 a, 28 jeweils einstückig miteinander ausgebildet sind. An unteren, den Anbindungsschienen zugewandten Enden sind die Sitzfüße jeweils über ein Formschlusselement mit der entsprechenden Anbindungsschiene formschlüssig verbunden. Die Formschlusselemente sind dabei als Fittings ausgebildet. Die Aufständereinheit 14a weist zwei Tragelemente 30a, 32a auf. Die Tragelemente 30a, 32a sind als Querträger ausgebildet. Die Tragelemente 30a, 32a sind als Tragrohre ausgebildet. Die Tragelemente 30a, 32a verlaufen in einer Querrichtung des Flugzeugsitzes 10a. Die Tragelemente 30a, 32a erstrecken sich im Wesentlichen über eine gesamte Breite der Flugzeugsitzreihe. Die Tragelemente 30a, 32a sind mit den Sitzfüßen 22a, 24a, 26a, 28a der Aufständereinheit 12a fest verbunden. Grundsätzlich ist es auch denkbar, dass die Aufständereinheit 12a lediglich ein Tragelement aufweist. Der Flugzeugsitz 10a umfasst zwei Sitzteiler 34a, 36a. Die Sitzteiler 34a, 36a sind mit den Tragelementen 30a, 32a verbunden. Die Sitzteiler 34a, 36a sind dabei im Wesentlichen so ausgebildet wie aus dem Stand der Technik bekannte Sitzteiler und sollen deshalb hier nicht näher beschrieben werden. Die Sitzreihe 16a umfasst zwei weitere äußere Sitzteiler 136a, 138a. Die äußeren Sitzteiler 134a, 136a schließen die Tragelemente 30a, 32a an seitlichen Enden der Sitzreihe 16a ab.

Die Aufständereinheit 12a weist eine Gepäckstange 130a auf. Die Gepäckstange 130a ist dazu vorgesehen, ein Durchrutschen von Gegenständen, wie insbesondere von Gepäck unterhalb des Flugzeugsitzes 10a, bzw. der Flugzeugsitzreihe 16a zu verhindern. Die Gepäckstange ist zwischen einem Kabinenboden und den Tragelementen 30a, 32a angeordnet. Die Gepäckstange 130a verläuft in Seitenbereichen der Flugzeugsitzreihe 16a jeweils parallel zur Sitzrichtung. In einer Querrichtung verläuft die Gepäckstange 130a im Bereich der vorderen Sitzfüße 22a, 24a im Wesentlichen parallel zu dem vorderen Tragelement 30a. Die Gepäckstange 130a ist mit den vorderen Sitzfüßen 22a, 24a jeweils fest gekoppelt. Die Gepäckstange 130a kann dabei insbesondere einstückig oder mehrteilig ausgebildet sein. Die Aufständereinheit 12a weist zwei Abstützstreben 132a, 134a auf. Die Abstützstreben 132a, 134a sind dazu vorgesehen, einen zusätzlichen Lastpfad zwischen dem vorderen Tragelement 30a, bzw. den äußeren Sitzteilern und den Sitzfüßen bereitzustellen. Die Abstützstreben 132a, 134a erstrecken sich insbesondere jeweils von einem Bereich eines äußeren Sitzteilers 136a, 138a bis zu einem der vorderen Sitzfüße 22a, 24a. Dabei sind die Abstützstreben 132a, 134a mit einem oberen, dem jeweiligen Sitzteiler 136a, 138a zugewandten Ende jeweils mit dem vorderen Tragelement 30a fest verbunden. Die Abstützstreben 132a, 134a sind vorzugsweise insbesondere über nicht näher dargestellte Schellen mit dem vorderen Tragelement 30a verbunden. Mit den Sitzfüßen 22a, 24a zugewandten Enden sind die Abstützstreben 132a, 134a jeweils mit der Gepäckstange 130a fest verbunden. Die Abstützstreben 132a, 134a sind dabei bevorzugt insbesondere unmittelbar in einem Bereich an dem jeweiligen Sitzfuß 22a, 24a an die Gepäckstange 130a angebunden. Dadurch kann ein Kraftfluss besonders vorteilhaft in die Sitzfüße 22a, 24a eingeleitet werden. Grundsätzlich ist es auch denkbar, dass die Abstützstreben 132a, 134a mit einem unteren Ende jeweils direkt mit dem entsprechenden Sitzfuß 22a, 24a verbunden sind. Grundsätzlich wäre es auch denkbar, dass die Abstützstreben als Zugstreben ausgebildet sind und mit einem oberen Ende anstatt zu dem vorderen Tragelement 30a zu dem hinteren Tragelement 32a geführt und in dessen Bereich direkt oder indirekt mit diesem verbunden sind.

Der Flugzeugsitz 10a weist einen Sitzboden 38a auf. Der Sitzboden 38a ist an der Aufständereinheit 12a angebunden. Der Sitzboden 38a ist dabei vorzugsweise auf eine aus dem Stand der Technik bekannte Weise mit der Aufständereinheit 12a gekoppelt. Der Flugzeugsitz 10a umfasst eine Rückenlehne 40a. Die Rückenlehne 40a ist schwenkbar ausgebildet. Die Rückenlehne 40a ist über nicht näher dargestellte Schwenklager an den Sitzteilern 34a, 36a schwenkbar angebunden. Die Schwenklager bilden einen Anbindungspunkt für die Rückenlehne 40a aus. Die Rückenlehne 40a weist einen Drehpunkt 42a auf, um den die Rückenlehne 40a relativ zu der Aufständereinheit 12a verschwenkbar ist. Der Drehpunkt 42a ist von den Schwenklagern, über die die Rückenlehne 40a mit den Sitzteilern 34a, 36a verbunden ist, ausgebildet. Die Rückenlehne 40a weist einen unteren Bereich auf. Der untere Bereich der Rückenlehne 40a ist unterhalb des Drehpunkts 42a angeordnet. Der untere Bereich der Rückenlehne 40a ist in einem Crashfall dazu vorgesehen, entgegen einer Sitzrichtung des Flugzeugsitzes 10a bewegt zu werden. Die Rückenlehne 40a weist für einen Crashfall eine vorteilhafte Biegesteifigkeit auf. Die Rückenlehne weist eine generische Rückenlehnensteifigkeit auf, die größer ist als 10 N/mm. Ist die Rückenlehne 40a an einem unteren Ende, insbesondere an dem Anbinungspunkt der Rückenlehne 40a, fest angebunden und greift an einem oberen Ende 44a der Rückenlehne 40a eine in Sitzrichtung ausgerichtete Kraft von 100 N an, so wird das obere Ende 44a der Rückenlehne 40a dabei um 1 cm in Sitzrichtung ausgelenkt. Dadurch kann die Rückenlehne für einen Crashfall besonders vorteilhaft ausgebildet werden. Der Flugzeugsitz 10a weist dabei mit allen seinen Anbauteilen, insbesondere den hier beschriebenen und allen weiteren, hier nicht näher spezifizierten Anbauteilen, wie beispielsweise einem Monitor, einer Tischeinheit und/oder einem Tabletthalter, ein Gewicht von unter 10 kg auf. Die Rückenlehne 40a bildet einen Rahmen 140a aus. Der Rahmen 140a bildet ein tragende Struktur der Rückenlehne 40a aus. Der Rahmen bildet im Wesentlichen eine u-förmige Grundform aus. An einem unteren Ende ist der Rahmen mit der Aufständereinheit 12a gekoppelt. Der Rahmen 140a ist über die Sitzteiler 34a, 36a mit der Aufständereinheit 12a gekoppelt. In einem oberen Bereich weist die Rückenlehne 40a ein erstes Querversteifungselement 142 auf. Das erste Querversteifungselement 142a ist als eine Platte ausgebildet, die in einem oberen Bereich der Rückenlehne 40a zwei Seitenteile des Rahmens 140a direkt miteinander verbindet. Das Querversteifungselement 142a ist als eine Metallplatte oder beispielsweise eine Platte aus einem faserverstärkten Kunststoff ausgebildet. Das Querversteifungselement 142a ist zur Versteifung des Rahmens 140a der Rückenlehne 40 vorgesehen. Das als Platte ausgebildete Querversteifungselement 142a kann dabei beispielsweise verschiedene Ausnehmungen aufweisen, die insbesondere der Gewichtsreduktion dienen. Grundsätzlich ist es auch denkbar, dass das Querversteifungselement 142a als eine durchgehende Platte ausgebildet ist. Die Rückenlehne 40a weist in einem Mittelbereich ein zweites Querversteifungselement 144a auf. Das zweite Querversteifungselement 144a ist als eine Strebe ausgebildet, die sich in dem Mittelbereich der Rückenlehne 40a von einem Seitenteil des Rahmens 140a bis zu dem gegenüberliegenden Seitenteil des Rahmens 140a erstreckt. Das zweite Querversteifungselement 144a ist zur Aussteifung des Rahmens 140a und insbesondere zur Kraftübertragung zwischen den beiden Seitenteilen des Rahmens 140 in dem Mittelbereich vorgesehen.

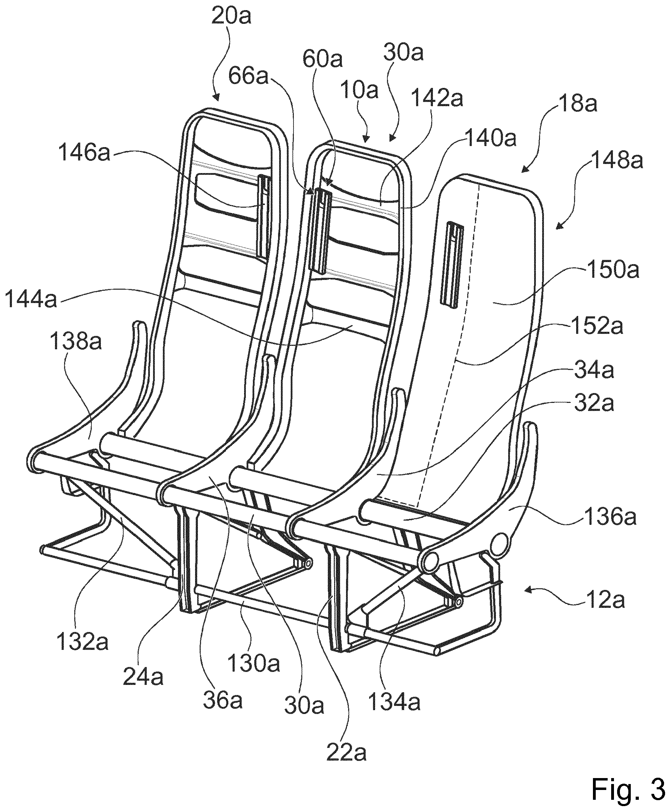

Grundsätzlich ist es auch denkbar, dass die Rückenlehne 40a eine andere tragende Struktur aufweist. Es ist insbesondere denkbar, dass die Rückenlehne 40a von einer Schale, insbesondere einer Schale aus einem faserverstärkten Kunststoff gebildet ist. In der Figur 3 ist der neben dem Flugzeugsitz 10a angeordnete Flugzeugsitz 18a der Sitzreihe 16a beispielhaft mit einer Rückenlehne 148a dargestellt, die von einem Schalenelement 150 gebildet ist, anstatt einem Rahmen 140a. Das Schalenelement 150 ist als eine Schale aus einem faserverstärkten Kunststoff ausgebildet, beispielsweise aus einem GFK, einem CFK, oder einem anderen, dem Fachmann als sinnvoll erscheinenden faserverstärkten Kunststoff. Das Schalenelement 150a kann dabei vorteilhaft insbesondere aus mehreren Lagen ausgebildet sein. Das Schalenelement 150a ist in einem Bereich 152a, der auf einer Seite, auf der ein Anbindungselement für eine Multipunktrückhalteeinheit an die Rückenlehne 148a angebunden ist, verstärkt ausgebildet. In dem Bereich 152a ist das Schalenelement 150a im Gegensatz zu der gegenüberliegenden Seite des Schalenelements 150a verstärkt ausgebildet. Dabei ist es insbesondere denkbar, dass Verstärkungselemente, wie beispielsweise zusätzliche Lagen CFK oder GFK, Metallplatten oder andere Verstärkungselemente, in das Schalenelement 150a eingelegt und fest mit diesem verbunden sind. Grundsätzlich ist es auch denkbar, dass das Schalenelement 150a auf der Seite des Bereichs 152a grundsätzlich im Gegensatz zu der gegenüberliegenden Seite eine größere Dicke aufweist. Das Schalenelement 150a könnte dabei in einem Querschnitt insbesondere eine Trapezform aufweisen. Das Anbindungselement zur Anbindung der Multipunktrückhalteeinheit ist insbesondere in dem Bereich 152a fest mit dem Schalenelement 150a verbunden. Grundsätzlich wäre es auch denkbar, dass das Anbindungselement einstückig mit dem Schalenelement 150a ausgebildet und beispielsweise in dieser eingelegt ist.

Die Flugzeugsitzvorrichtung weist eine Sicherheitsvorrichtung 46a auf. Die Sicherheitsvorrichtung 46a ist für den als Economy-Flugzeugsitz ausgebildeten Flugzeugsitz 10a vorgesehen. Die Sicherheitsvorrichtung 46a ist für den Flugzeugsitz 10a vorgesehen, der insbesondere unter 10 kg wiegt. Die Sicherheitsvorrichtung 46a ist insbesondere für den Flugzeugsitz 10a mit der verschwenkbaren Rückenlehne 40a vorgesehen. Die Sicherheitsvorrichtung 46a ist zur Sicherung eines Passagiers auf dem Flugzeugsitz 10a zu sichern. Die Sicherungsvorrichtung 46a ist als ein Nachrüstsatz ausgebildet. Dabei ist die Sicherungsvorrichtung 46a insbesondere dazu vorgesehen, in bestehende, insbesondere zugelassene Flugzeugsitze integriert zu werden. Die Sicherungsvorrichtung 46a ist dazu vorgesehen, den Passagier dabei möglichst sicher auf dem Flugzeugsitz 10a zu sichern und insbesondere eine Verletzungsgefahr für den Passagier zu verringern. Die Sicherungsvorrichtung 46a ist dazu vorgesehen, in einem Crashfall einen Kopfkontakt mit einer vorgelagerten Einheit 48a zuzulassen. Die Sicherheitsvorrichtung 46a ist insbesondere dazu vorgesehen, in einem Prüfcrashfall einen Kopfkontakt mit der vorgelagerten Einheit 48a zuzulassen. Ein Prüfcrashfall ist als ein Crashfall ausgebildet, der in einem einen echten Crashfall simulierenden Testverfahren auf einer entsprechend ausgeführten Testvorrichtung durchgeführt wird. Bei einem Prüfcrashfall wird ein Crashtestdummy 50a auf dem Flugzeugsitz 10a angeordnet und mittels der Sicherungsvorrichtung 46a auf dem Flugzeugsitz 10a gesichert. Der Crashtestdummy 50a ist in einer aufrechten Sitzposition auf dem Flugzeugsitz 10a angeordnet. In dem Prüfcrashfall ist die Sicherungsvorrichtung 46a dazu vorgesehen, den Crashtestdummy 50a auf dem Flugzeugsitz 10a zu sichern. Die Sicherungsvorrichtung 46a ist dazu vorgesehen, den Crashtestdummy 50a so in dem Flugzeugsitz 10a zu sichern, dass insbesondere vorteilhafte Beschleunigungs- Aufschlagskraft- und/oder Sicherheitswerte in dem Prüfcrashfall erreicht werden können. Die Sicherheitsvorrichtung 46a ist dazu vorgesehen, eine Kopfauftreffgeschwindigkeit auf die vorgelagerte Einheit 48a in dem Prüfcrashfall auf weniger als 6 m/s zu begrenzen. Eine Kopfauftreffgeschwindigkeit ist als eine Geschwindigkeit eines Kopfs 52a des Crashtestdummys 50a kurz vor dem Auftreffen auf dem vorgelagerten Element 48a, ausgebildet. Dadurch kann der Flugzeugsitz 10a mit der Sicherheitsvorrichtung 46a besonders sicher ausgebildet werden. Bei einem in einer Flugzeugkabine aufgeständerten Flugzeugsitz 10a ist die Sicherungsvorrichtung 46a dazu vorgesehen, einen auf dem Flugzeugsitz 10a sitzenden Passagier in dem Flugzeugsitz zu sichern. Die Sicherungsvorrichtung 46a ist dazu vorgesehen, den auf dem Flugzeugsitz 10a sitzenden Passagier in einem Crashfall in dem Flugzeugsitz 10a zu sichern und vor Verletzungen zu schützen. Dabei ist die Sicherungsvorrichtung 46a in einem Crashfall dazu vorgesehen, gleiche Sicherungsmaßnahmen für den Passagier zu erfüllen wie bei dem Crashtestdummy 50a in dem Prüfcrashfall. Die Begriffe "Prüfcrashfall" und "Crashfall" sowie "Crashtestdummy" und "Passagier" können für die Erläuterung der Sicherheitsvorrichtung 46a beliebig ausgetauscht werden.

Die vorgelagerte Einheit 48a ist beispielhaft als ein weiterer, vor dem Flugzeugsitz 10a angeordneter Flugzeugsitz, insbesondere als eine Rückenlehne des weiteren Flugzeugsitzes ausgebildet. Die Sicherungsvorrichtung 46a definiert ein Kontaktfeld 52a. Das Kontaktfeld 52a ist als ein Kopfkontaktfeld ausgebildet. Das Kontaktfeld 52a ist als ein Bereich auf der vorgelagerten Einheit 48a ausgebildet, in dem der Crashtestdummy 50a in dem Prüfcrashfall, insbesondere mit seinem Kopf mit der vorgelagerten Einheit 48a in Kontakt kommt. Das Kontaktfeld 52a ist in einem oberen Bereich der als Rückenlehne ausgebildeten vorgelagerten Einheit 48a angeordnet. Das Kontaktfeld 52a ist in einem oberen Viertel der als Rückenlehne ausgebildeten vorgelagerten Einheit 48a angeordnet. Das Kontaktfeld 52a weist dabei eine Breite von 200 mm auf. Das Kontaktfeld 52a weist dabei eine Höhe von 200 mm auf. Das Sicherungsvorrichtung 46a ist insbesondere dazu vorgesehen, dass der Crashtestdummy 50a in dem Prüfcrashfall in 99% der Wiederholungen in dem Kontaktfeld 52a mit seinem Kopf auftrifft. Dadurch kann die vorgelagerte Einheit 48a, insbesondere in dem Kontaktfeld 52a, besonders vorteilhaft ausgebildet werden, um entsprechende Beschleunigungswerte des Crashtestdummys 50a in dem Prüfcrashfall vorteilhaft auszugestalten. Die Sicherungsvorrichtung 46a ist durch die im Folgenden beschriebenen Vorrichtungen, Bauteile und Eigenschaften dazu vorgesehen, das Kontaktfeld 52a zu definieren und insbesondere die Kopfaufschlaggeschwindigkeit auf unter 6 m/s zu begrenzen. Dabei ist es denkbar, dass alle der im Folgenden beschriebenen Vorrichtungen, Bauteile und Eigenschaften der Sicherheitsvorrichtung 46a implementiert sind oder dass nur einzelne der Vorrichtungen, Bauteile und/oder Eigenschaften implementiert sind.

Die Sicherungsvorrichtung 46a weist eine Multipunktrückhalteeinheit 54a. Die Multipunktrückhalteeinheit 54a ist zur Fixierung des Passagiers auf dem Flugzeugsitz 10a vorgesehen. Mittels der Multipunktrückhalteeinheit 54a kann ein Passagier auf dem Flugzeugsitz 10a angeschnallt werden. Die Multipunktrückhalteeinheit 54a ist als ein Dreipunktgurt ausgebildet. Die Multipunktrückhalteeinheit 54a umfasst einen Beckengurt 56a und einen Schultergurt. 58. Der Beckengurt 56a ist dazu vorgesehen, den Passagier in einem Becken- und Hüftbereich zu sichern. Der Beckengurt 56a ist in einem geschlossenen Zustand der Multipunktrückhalteeinheit 54a dazu vorgesehen, den Sitzboden 38a zu überspannen. Der Beckengurt 56a ist dazu vorgesehen, dass der Passagier in einem geschlossenen Zustand der Multipunktrückhalteeinheit 54a mit einem Becken- und Schoßbereich zwischen dem Sitzboden 38a und dem Beckengurt 56a angeordnet ist. Der Schultergurt 58a ist dazu vorgesehen, einen Oberkörper des Passagiers an dem Flugzeugsitz 10a zu sichern. Der Schultergurt 58a ist insbesondere dazu vorgesehen, zur Sicherung des Passagiers auf dem Flugzeugsitz 10a von einem oberen Bereich der Rückenlehne 40a quer über eine Rückenlehnenfläche der Rückenlehne 40a an ein unteres Ende der Rückenlehne 40a zu verlaufen. Der Schultergurt 58a verläuft in einem geschlossenen Zustand der Multipunktrückhalteeinheit 54a quer über einen Torso des Passagiers, so dass dieser gesichert ist.

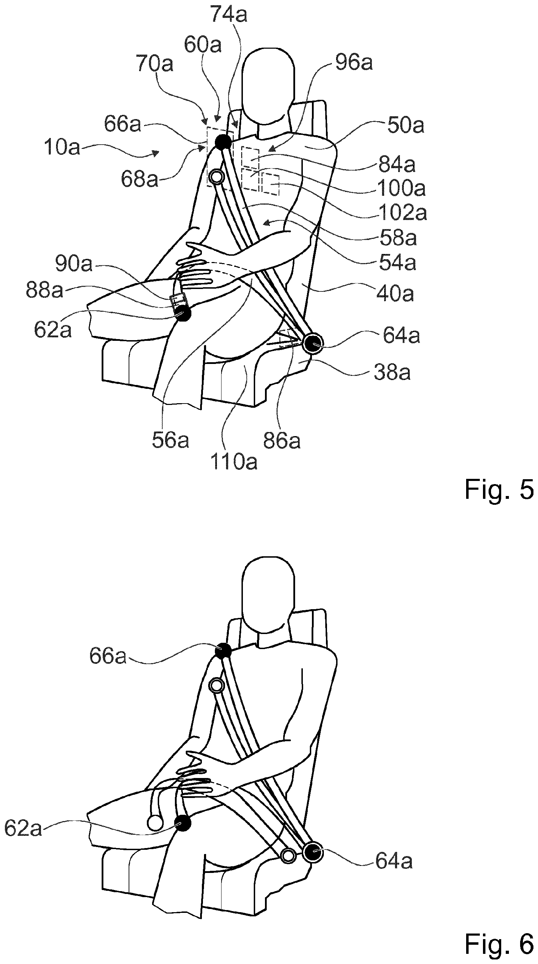

Zur Anbindung der Multipunktrückhalteeinheit 54a an den Flugzeugsitz 10a weist die Sicherheitsvorrichtung 46a eine Anbindungseinheit 60a auf. Die Anbindungseinheit 60a ist dazu vorgesehen, die Multipunktrückhalteeinheit 54a betriebssicher und fest an den Flugzeugsitz 10a anzubinden. Die Anbindungseinheit 60a weist einen ersten Anbindungspunkt 62a auf, an dem der Beckengurt 56a mit einem ersten Ende an den Flugzeugsitz 10a angebunden ist. Der erste Anbindungspunkt 62a ist auf einer ersten Seite des Flugzeugsitzes 10a fest mit der Aufständereinheit 12a des Flugzeugsitzes 10a verbunden. Der Anbindungspunkt 62a bindet den Beckengurt 56a mit seinem ersten Ende in einem montierten Zustand permanent fest an die Aufständereinheit 12a an. Die Anbindungseinheit 60a weist einen zweiten Anbindungspunkt 64a auf. Über den zweiten Anbindungspunkt 64a ist der Beckengurt 56a mit einem zweiten Ende, zusammen mit einem zweiten Ende des Schultergurts 58a an die Aufständereinheit 12a anbindbar. Der zweite Anbindungspunkt 64a bildet dabei ein Gurtschloss aus, über das der Beckengurt 56a und der Schultergurt 58a in einem geschlossenen Zustand der Multipunktrückhalteeinheit 54a fest mit der Aufständereinheit 12a des Flugzeugsitzes 10a verbindbar ist und in einem geöffneten Zustand der Multipunktrückhalteeinheit 54a von der Aufständereinheit 12a des Flugzeugsitzes getrennt ist. Grundsätzlich ist es auch denkbar, dass über den zweiten Anbindungspunkt 64a ein zweites Ende des Beckengurts 56a permanent fest an der Aufständereinheit 12a angeordnet ist und die Multipunktrückhalteeinheit 54a ein separates Gurtschloss aufweist, das in einem Bereich des zweiten Endes des Beckengurts 56a angeordnet ist und diesen in zwei voneinander trennbare Teilstücke teilt, wobei der Schultergurt mit einem zweiten Ende an dem Gurtschloss befestigbar ist. Die Anbindungseinheit 60a weist einen dritten Anbindungspunkt 66a auf, über den der Schultergurt 58a mit einem ersten Ende fest mit dem Flugzeugsitz 10a verbunden ist. Über den dritten Anbindungspunkt 66a ist der Schultergurt 58a mit seinem ersten Ende fest mit der Rückenlehne 40a des Flugzeugsitzes 10a verbunden. Der dritte Anbindungspunkt 66a ist dabei in einem oberen Bereich der Rückenlehne 40a angeordnet. Über den dritten Anbindungspunkt 66a ist der Schultergurt 58a fest mit einer tragenden Struktur der Rückenlehne 40a verbunden. Die Anbindungseinheit 60a ist dazu vorgesehen, den Anbindungspunkt 66a, über den der Schultergurt mit einem ersten, oberen Ende an dem Flugzeugsitz angebunden ist, während eines Crashfalls zu verschieben. Die Anbindungseinheit 60a weist einen Verschiebemechanismus 68a auf. Der Verschiebemechanismus 68a ist dazu vorgesehen, den Anbindungspunkt 66a in einem Crashfall um 10 cm zu bewegen. Der Verschiebemechanismus 68a ist dazu vorgesehen, den Anbindungspunkt 66a in einem Crashfall entlang einer Bewegungsbahn zu verschieben. Der Verschiebemechanismus 68a ist dazu vorgesehen, den Anbindungspunkt 66a in einem Crashfall nach unten, in Richtung der Aufständerebene 14a zu verstellen. Die Bewegungsbahn, entlang der der dritte Anbindungspunkt 66a verstellbar ist, ist im Wesentlichen senkrecht ausgerichtet. Grundsätzlich ist es auch denkbar, dass der Anbindungspunkt 66a über die Bewegungsbahn sowohl senkrecht als auch in Sitzrichtung oder entgegen der Sitzrichtung bewegbar ist. Grundsätzlich ist es ebenso denkbar, dass die Bewegungsbahn, entlang der der dritte Anbindungspunkt 66a verstellbar ist, eine Richtungskomponente aufweist, die in einer Querrichtung ausgerichtet ist. Der Verschiebemechanismus 68a ist dazu vorgesehen, den Anbindungspunkt 66a der Anbindungseinheit 60a ab einer definierten, während des Crashfalls auf die Multipunktrückhalteeinheit 54a wirkenden Kraft nach unten zu verstellen. Figur 5 zeigt schematisch eine Verstellung des dritten Anbindungspunkts 68a der Anbindungseinheit 60a. Figur 6 zeigt eine Anbindungseinheit 60a, die im Vergleich zu der obigen Beschreibung anders ausgebildet und dazu vorgesehen ist, in einem Crashfall alle drei Anbindungspunkte 62a, 64a, 66a, über die der Beckengurt 56a und der Schultergurt 58a an den Flugzeugsitz 10a angebunden sind, in einem Crashfall über einen Verschiebemechanismus 68a zu bewegen. Dabei ist es beispielsweise denkbar, dass die Anbindungspunkte 62a, 64a zur Anbindung des Beckengurts 56a in einem Crashfall nach vorne bewegt werden (siehe Figur 6).

Der dritte Anbindungspunkt 66a zur Anbindung des Schultergurts 58a ist in einem Bereich oberhalb der Sitzfüße 24a, 28a angeordnet. Die Rückenlehne 40a umfasst ein Anbindungselement 146a über das der Schultergurt 58a fest mit der Rückenlehne 40 verbunden ist. Das Anbindungselement 146a ist mit dem Rahmen 140a der Rückenlehne verbunden. Das Anbindungselement 146a ist insbesondere mit dem Querversteifungselement 142a fest verbunden. Eine Seite der Rückenlehne 40a, an der Anbindungspunkt 66a für den Schultergurt 58a angebunden ist, ist verstärkt ausgebildet. Der Rahmen 140a der Rückenlehne 40 ist auf der Seite, an der der Schultergurt 58a an die Rückenlehne angebunden ist, verstärkt ausgebildet. Dazu weist das entsprechende Seitenteil des Rahmens 140 eine größere Materialstärke und einen größeren Durchmesser auf als das gegenüberliegende Seitenteil des Rahmens 140a. Grundsätzlich ist es auch denkbar, dass der Rahmen auf der entsprechenden Seite aus einem anderen, insbesondere steiferen Material ausgebildet ist, oder dass in das entsprechende Seitenteil des Rahmens 140a entsprechende Verstärkungselemente aus einem steiferen Material integriert sind. So können insbesondere Gurtkräfte besser in die Rückenlehne eingebracht werden. Dadurch kann eine unvorteilhafte Verformung der Rückenlehne 40a in einem Überlastfall vorteilhaft vermieden werden. Der Anbindungspunkt 66a ist insbesondere im Wesentlichen oberhalb der Sitzfüße 24a, 28a angeordnet. Der Anbindungspunkt 66a für den Schultergurt 58a, wobei dieser auf einer Seite der Rückenlehne 40a angeordnet ist, die in Querrichtung einem Sitzfuß 24a, 28a zugewandt ist. Der Anbindungspunkt 66a ist erfindungsgemäss auf einer Seite einer Rückenlehne angeordnet, die in Querrichtung einen kürzeren Abstand zu einem Sitzfuß 24a, 26a, 28a, 30a aufweist als eine gegenüberliegende Seite der Rückenlehne 40a. Die Seite auf der der Anbindungspunkt 66a angeordnet ist, ist in einem Fall, in dem die Sitzfüße 24a, 26a, 28a, 30a neben der Rückenlehne 40a angeordnet sind, als die Seite der Rückenlehne 40a ausgebildet, die in Querrichtung dem entsprechenden nächsten Sitzfuß 24a, 26a, 28a, 30a zugewandt ist. In einem Fall in dem die Sitzfüße 24a, 26a, 28a, 30a unterhalb der Rückenlehne 40a angeordnet sind, ist der Anbindungspunkt 66a für den Schultergurt 58a auf der Seite der Rückenlehne 40a angeordnet, die in Querrichtung einen geringeren Abstand zu dem entsprechenden unter der Rückenlehne 40a angeordneten Sitzfuß 24a, 26a, 28a, 30a aufweist. Durch den geringen Abstand zwischen dem Anbindungspunkt 66a zur Anbindung des Schultergurts 58 und den Sitzfüßen 24a, 28a wird eine Kraft von dem Schultergurt 58a vorteilhaft nahe an den Sitzfüßen 24a, 28a und an dem Sitzteiler 36a in die Rückenlehne 40a eingeleitet. Dadurch ist, insbesondere in einem Crashfall, ein Lastpfad einer über den Schultergurt 58a in die Rückenlehne eingeleiteten Kraft in die Aufständereinheit 12a vorteilhaft direkt. Die Kräfte können vorteilhaft direkt in die Aufständereinheit 12a und dadurch in die Aufständerebene 14a abgeleitet werden. In einer Flugzeugsitzreihe 16a mit mehreren Flugzeugsitzen 10a, 18a, 20a sind alle Anbindungspunkte 66a der Schultergurte 58a der Flugzeugsitze 10a, 18a, 20a im Bereich der Sitzfüße 22a, 24a, 26a, 28a angeordnet. In einer Flugzeugsitzreihe 16a mit mehreren Flugzeugsitzen 10a, 18a, 20a sind erfindungsgemäss alle Anbindungspunkte 66a der Schultergurte 58a der Flugzeugsitze 10a, 18a, 20a auf einer Seite der jeweiligen Rückenlehne 40a angeordnet, die in Querrichtung einen geringeren Abstand zu einem Sitzfuß 22a, 24a, 26a, 28a aufweisen als die gegenüberliegende Seite der entsprechenden Rückenlehne 40a.

Der Schultergurt 58a der Multipunktrückhalteeinheit 54a ist abnehmbar ausgebildet. Der Schultergurt 58a ist dabei insbesondere von dem Beckengurt 56a abnehmbar ausgebildet. Der Schultergurt 58a ist insbesondere durch das von dem zweiten Anbindungspunkt 64a ausgebildete Gurtschloss separat von dem Beckengurt 56a abnehmbar. Dadurch ist der Beckengurt 56a ohne den Schultergurt 58a zum Sichern des Passagiers über die Multipunktrückhalteeinheit an dem Flugzeugsitz verwendbar. Der Schultergurt 58a ist dabei bei Nichtgebrauch in einer dafür vorgesehenen Aufnahme in der Rückenlehne 40a verstaubar. Grundsätzlich ist es auch denkbar, dass der Schultergurt 58a auch an seinem ersten Ende, also an dem dritten Anbindungspunkt 66a der Anbindungseinheit 60a von der Rückenlehne 40a zerstörungsfrei lösbar ist. So ist es beispielsweise denkbar, dass der Schultergurt 58a komplett von dem Flugzeugsitz 10a demontierbar ist, während der Rest der Multipunktrückhalteeinheit 54a, nämlich insbesondere der Beckengurt 56a, weiter zur Sicherung eines Passagiers verwendbar ist.

Die Sicherheitsvorrichtung 46a weist ein Anschlagselement 126a auf. Das Anschlagselement 126a ist dazu vorgesehen, einen maximalen Schwenkwinkel der Rückenlehne 40a in einem Crashfall durch eine direkte Abstützung an dem Sitzteiler 36a zu begrenzen. Das Anschlagselement 126a ist fest mit dem Sitzteiler 36a verbunden. Vorzugsweise ist das Anschlagselement 126a mittels einer Schraubenverbindung fest mit dem Sitzteiler 36a verbunden. Grundsätzlich wäre es auch denkbar, dass das Anschlagselement 126a einstückig mit dem Sitzteiler 36a ausgebildet ist oder auf eine andere, dem Fachmann als sinnvoll erscheinende, Weise fest mit dem Sitzteiler 36a verbunden ist. Das Anschlagselement 126a ist L-Förmig ausgebildet. Mit einem langen Bereich liegt das Anschlagselement 126a an dem Sitzteiler 36a an. Ein kurzer Bereich bildet auf einer in Sitzrichtung ausgerichteten Seite eine Anschlagsfläche 128a aus. Das Anschlagselement 126a ist hinter dem unteren Bereich der Rückenlehne 40a angeordnet. In einem Normalbetriebszustand ist das Anschlagselement 126a in allen zulässigen Stellungen der Rückenlehne 40a beabstandet zu der Rückenlehne 40a, insbesondere zu dem unteren Bereich der Rückenlehne 40a, angeordnet. In einer TTL-Stellung sowie in einer Komfortstellung der Rückenlehne 40a ist das Anschlagselement 126a beabstandet zu der Rückenlehne 40a angeordnet. In einem Crashfall ist das Anschlagselement 126a dazu vorgesehen, durch kontaktieren des unteren Bereichs der Rückenlehne 40a eine Verschwenkung der Rückenlehne 40a mit einem oberen Bereich nach vorne auf eine Maximalstellung zu begrenzen. Die Rückenlehne 40a ist dabei vorzugsweise aus der TTL-Stellung um maximal 30 Grad nach vorne geschwenkt. Der untere Bereich der Rückenlehne 40a bewegt sich in einem Crashfall entgegen der Sitzrichtung nach hinten auf das Anschlagselement 126a zu. Bei Erreichen der Maximalstellung schlägt der untere Bereich der Rückenlehne 40a an der Anschlagsfläche 128a des Anschlagselements 126a an. Dadurch wird eine weitere Verschwenkung der Rückenlehne 40a verhindert, insbesondere bevor eine durch ein entsprechendes Schwenklager und Aktuatorik begrenzte Maximalverstellung erreicht wäre. Ist die Rückenlehne 40a in einem Crashfall mit seinem unteren Bereich an dem Anschlagselement 126a angeschlagen, kann eine Kraft, insbesondere eine durch den Schultergurt in die Rückenlehne 40a eingeleitete Kraft, direkt von dem unteren Ende der Rückenlehne 40a in den Sitzteiler 36a und dadurch in die Aufständereinheit 12a eingeleitet werden. Dadurch kann in dem Crashfall eine in die Rückenlehne 40a eingeleitete Kraft, insbesondere eine durch den Schultergurt 58a in die Rückenlehne 40a eingeleitete Kraft, vorteilhaft direkt in den Sitzteiler 36a und die Aufständereinheit 12a abgeleitet werden. Dadurch kann ein besonders vorteilhafter Kraftfluss erreicht werden. Grundsätzlich wäre es auch denkbar, dass die Rückenlehne 40a in der TTL-Stellung an dem Anschlagselement 126a anliegt. Dadurch wäre eine Rotation der Rückenlehne 40a in einem Crashfall nach vorne verhindert. Eine durch den Schultergurt 58a in die Rückenlehne 40a eingeleitete Kraft könnte direkt ohne vorherige Verschwenkung in der TTL-Stellung in den Sitzteiler 36a eingeleitet werden. Grundsätzlich wäre es ebenso denkbar, dass ein Kraftbegrenzer in das Anschlagselement 126a integriert ist, sodass das Anschlagselement 126a eine Rotation der Rückenlehne 40a nur bis zu einer definierten Kraft verhindert und ab dieser Kraft die Rotation der Rückenlehne 40a freigibt. Der Kraftbegrenzer könnte dabei als Sollbruchstelle ausgebildet sein. Dadurch könnte zunächst eine durch den Schultergurt 58a in die Rückenlehne 40a eingeleitete Kraft an dem Sitzteiler abgestützt werden und dann vorteilhaft eine Rotation der Rückenlehne 40a zugelassen werden.

Die Sicherheitsvorrichtung 46a weist eine Straffeinheit 70a auf. Die Straffeinheit 70a ist dazu vorgesehen, die Multipunktrückhalteeinheit 54a zumindest in einem Crashfall zumindest teilweise zu spannen. Die Straffeinheit 70a ist dazu vorgesehen, den Schultergurt 58a in einem Crashfall zu spannen. Die Straffeinheit 70a ist als eine Gurtstraffeinheit ausgebildet. Die Straffeinheit 70a ist innerhalb eines Grundkörpers der Rückenlehne 40a angeordnet. Die Straffeinheit 70a ist in einem oberen Bereich der Rückenlehne 40a angeordnet. Die Straffeinheit 70a ist an dem ersten Ende des Schultergurts 58a angebunden. Die Straffeinheit 70a ist dazu vorgesehen, den Schultergurt 58a durch Einleiten einer Kraft über das erste Ende des Schultergurts 58a zu spannen. Die Straffeinheit 70a ist dabei als eine aus dem Stand der Technik bekannte Gurtstraffeinheit ausgebildet. Die Straffeinheit 70a ist weiter dazu vorgesehen, den Beckengurt 56a der Multipunktrückhalteeinheit 54a durch den Schultergurt 58a der Multipunktrückhalteeinheit 54a zu spannen. Dazu weist die Straffeinheit 70a ein Koppelelement auf, das den Beckengurt 56a, insbesondere ein erstes Ende des Beckengurts 56a, mit dem Schultergut 58a koppelt. Durch eine Bewegung des Schultergurts 58a, insbesondere durch ein Straffen des Schultergurts 58a, wird eine Bewegung über das Koppelelement der Straffeinheit 70a auf den Beckengurt 56a übertragen und strafft diesen dadurch. Grundsätzlich ist es auch denkbar, dass die Sicherheitsvorrichtung 46a eine weitere Straffeinheit aufweist, die insbesondere lediglich zur Straffung des Beckengurts 56a der Multipunktrückhalteeinheit 54a vorgesehen ist.

Die Sicherheitsvorrichtung 46a weist eine Freigabeeinrichtung 72a auf. Die Freigabeeinrichtung 72a ist dazu vorgesehen, in einem Prüfcrashfall eine definierte Bewegung eines Passagiers zuzulassen. Die Freigabeeinrichtung 72a ist dazu vorgesehen, eine Schwenkbewegung der Rückenlehne 40a freizugeben. Die Freigabeeinrichtung 72a weist eine Neigungseinheit 74a auf. Die Neigungseinheit 74a ist dazu vorgesehen, den Flugzeugsitz 10a in einem Crashfall nach vorne zu neigen. Durch die Neigung des Flugzeugsitzes 10a nach vorne kann die Freigabeeinrichtung 72a durch die Neigungseinheit 74a eine definierte Bewegung des Passagiers zulassen. Die Neigungseinheit 74a weist zwei Dämpfungselemente 76a, 78a auf. Die zwei Dämpfungselemente 76a, 78a sind in den vorderen Sitzfüßen 22a, 24a der Aufständereinheit 12a angeordnet. Die Dämpfungselemente 76a, 78a sind dazu vorgesehen, in einem Crashfall komprimiert zu werden. Die Neigungseinheit 74a weist zwei weitere Dämpfungseinheiten 80a, 82a auf. Die zwei Dämpfungselemente 80a, 82a sind in den hinteren Sitzfüßen 26a, 28a der Aufständereinheit 12a angeordnet. Die Dämpfungseinheiten 80a, 82a sind dazu vorgesehen, in einem Crashfall gedehnt zu werden. Die Dämpfungseinheiten 76a, 78a, 80a, 82a sind insbesondere dazu vorgesehen, ab einer definierten, auf sie wirkenden Kraft gedehnt oder komprimiert zu werden. Die Dämpfungseinheiten 76a, 78a, 80a, 82a sind insbesondere dazu vorgesehen, bei Kräften, die einem Normalbetrieb des Flugzeugsitzes 10a entsprechen unverändert zu bleiben. In einem Normalbetriebszustand des Flugzeugsitzes 10a werden die Dämpfungseinheiten 76a, 78a, 80a, 82a nicht komprimiert oder gedehnt. Durch die Dämpfungseinheiten 76a, 78a, 80a, 82a sind die jeweiligen Sitzfüße 22a, 24a, 26a, 28a in ihrer Länge veränderbar. Durch die Streckung der hinteren Sitzfüße 26a, 28a und die Komprimierung der vorderen Sitzfüße 22a, 24a wird die Aufständereinheit 12a und dadurch der Flugzeugsitz 10a relativ zu der Aufständerebene 14a nach vorne geschwenkt.

Die Freigabeeinrichtung 72a weist einen Kraftbegrenzer 84a auf. Der Kraftbegrenzer 84a ist als ein Gurtkraftbegrenzer ausgebildet. Der Kraftbegrenzer 84a ist dazu vorgesehen, eine in der Multipunktrückhalteeinheit 54a wirkende Kraft zumindest teilweise zu begrenzen. Dadurch ist der Kraftbegrenzer 84a auch dazu vorgesehen, eine über die Multipunktrückhalteeinheit 54a an den Passagier übertragene Kraft zu begrenzen und dadurch eine Verletzungsgefahr zu minimieren. Der Kraftbegrenzer 84a ist dazu vorgesehen, eine Kraft in dem Schultergurt 58a zu begrenzen. Der Kraftbegrenzer 84a ist dazu vorgesehen, die Kraft in dem Schultergurt 58a auf 2,2 KN zu begrenzen. Der Kraftbegrenzer 84a ist an einem ersten Ende des Schultergurts 58a angeordnet. Es ist denkbar, dass der Kraftbegrenzer 84a in die Anbindungseinheit 60a integriert ist. Der Kraftbegrenzer 84a ist dabei als ein aus dem Stand der Technik bekannter Gurtkraftbegrenzer ausgebildet. Der Kraftbegrenzer 84a gibt ab einer definierten, auf den Schultergurt 58a wirkenden Kraft nach und ermöglicht dabei eine Verlängerung des Schultergurts 58a. Die Freigabeeinrichtung 72a weist einen Kraftbegrenzer 86a auf. Der Kraftbegrenzer 86a ist als ein Gurtkraftbegrenzer ausgebildet. Der Kraftbegrenzer 86a ist dazu vorgesehen, eine in der Multipunktrückhalteeinheit 54a wirkende Kraft zumindest teilweise zu begrenzen. Dadurch ist der Kraftbegrenzer 86a auch dazu vorgesehen, eine über die Multipunktrückhalteeinheit 54a an den Passagier übertragene Kraft zu begrenzen und dadurch eine Verletzungsgefahr zu minimieren. Der Kraftbegrenzer 86a ist dazu vorgesehen, eine Kraft in dem Beckengurt 56a zu begrenzen. Der Kraftbegrenzer 86a ist dazu vorgesehen, die Kraft in dem Beckengurt 56a auf 3,3 KN zu begrenzen. Der Kraftbegrenzer 86a ist an einem ersten Ende des Beckengurts 56a angeordnet. Es ist denkbar, dass der Kraftbegrenzer 86a in die Anbindungseinheit 60a integriert ist.

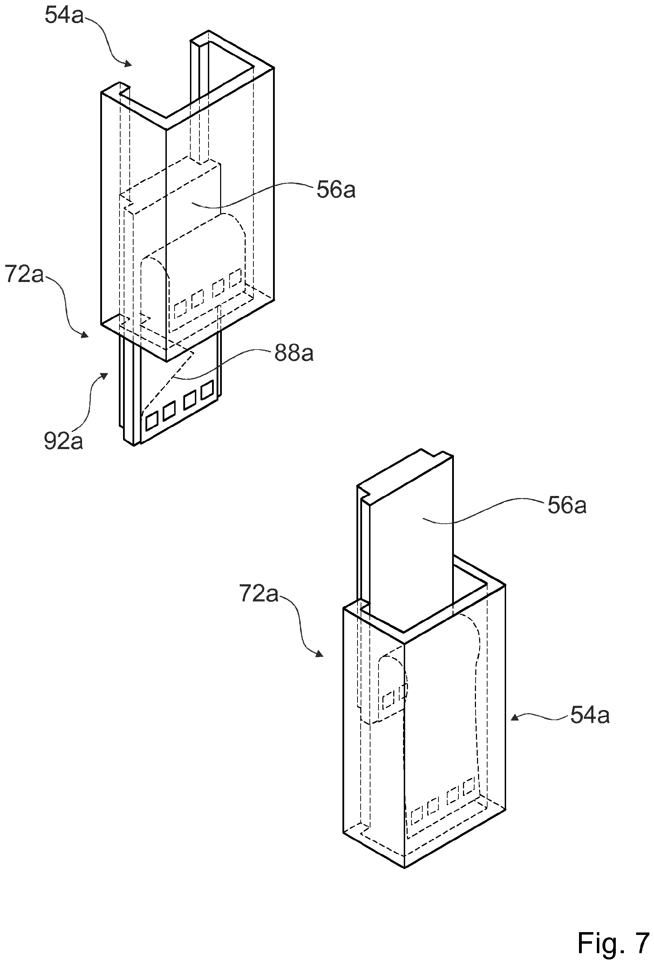

Die Freigabeeinrichtung 72a ist dazu vorgesehen, eine Beckenbewegung des Passagiers zuzulassen. Die Freigabeeinrichtung 72a ist dazu vorgesehen, in einem Crashfall eine Bewegung eines Beckens oder eines Beckenbereichs eines Passagiers in Flugrichtung zuzulassen. Die Freigabeeinrichtung 72a ist dazu vorgesehen, eine Beckenbewegung des Passagiers relativ zu dem Sitzboden 38a zuzulassen. Grundsätzlich wäre es auch denkbar, dass die Freigabeeinrichtung 72a dazu vorgesehen ist, eine Beckenbewegung des Passagiers zusammen mit dem Sitzboden 38a relativ zu der Aufständerebene 14a zuzulassen. Die Freigabeeinrichtung 72a weist zumindest eine Zerstörungselement 88a auf. Das Zerstörungselement 88a ist als eine Aufrissnaht in der Multipunktrückhalteeinheit 54a ausgebildet. Die Freigabeeinrichtung 72a weist ein weiteres Zerstörungselement 90a auf. Das weitere Zerstörungselement 90a ist als eine Aufrissnaht ausgebildet. Die als Aufrissnähte ausgebildeten Zerstörungselemente 88a, 90a sind in den Beckengurt 56a der Multipunktrückhalteeinheit 54a eingebracht. Grundsätzlich ist es auch denkbar, dass zumindest eine oder beide als Aufrissnähte ausgebildeten Zerstörungselemente 88a, 90a in den Schultergurt 58a der Multipunktrückhalteeinheit 54a eingebracht sind. Die Aufrissnähte verbinden zwei durch eine Dopplung 92a des Beckengurts 56a übereinander gelegte Teilbereiche des Beckengurts 56a fest miteinander. In einem Normalbetriebszustand können Kräfte über die als Aufrissnähte ausgebildeten Zerstörungselemente 88a, 90a übertragen werden. Ab einer definierten, auf den Beckengurt 56a wirkenden Kraft werden die Zerstörungselemente 88a, 90a zerstört und geben eine teilweise Bewegung des Beckengurts 56a frei. Die definierte Kraft ist dabei als eine Kraft ausgebildet, die insbesondere lediglich in einem Crashfall auf den Beckengurt 56a wirkt und insbesondere nicht in einem Normalbetriebszustand. Die als Aufrissnähte ausgebildeten Zerstörungselemente 88a, 90a reißen auf und trennen die durch sie verbundenen Teilbereiche in der entsprechenden Dopplung 92a des Beckengurts 56a. Dadurch kann der Beckengurt 56a um eine Länge der Dopplung 92a verlängert werden. Durch die Verlängerung des Beckengurts 56a durch die Zerstörung der Zerstörungselemente 88a, 90a kann der Passagier mit seinem Beckenbereich relativ zu dem Sitzboden 38a und damit relativ zu der Aufständerebene 14a bewegt werden, da der Passagier in seinem Beckenbereich von dem Beckengurt 56a zeitweise nicht mehr so eng an dem Flugzeugsitz 10a gehalten wird. Die beiden Zerstörungselemente 88a, 90a, sind dazu vorgesehen, bei unterschiedlichen Belastungen zerstört zu werden, insbesondere zu reißen. Dadurch kann eine zugelassene Beckenbewegung des Passagiers gezielt gesteuert werden. In der Figur 7 ist schematisch ein als Aufrissnaht ausgebildetes Zerstörungselement 88a, 90a dargestellt, einmal in einem intakten Zustand und einmal in einem gerissenen Zustand.

Die Sicherheitsvorrichtung 46a weist eine weitere Freigabeeinrichtung 94a auf. Die Freigabeeinrichtung 94a ist in die Aufständereinheit 12a des Flugzeugsitzes 10a integriert. Die Freigabeeinrichtung 94a ist dazu vorgesehen, eine Beckenbewegung des Passagiers zuzulassen. Die Freigabeeinrichtung 94a ist dazu vorgesehen, in einem Crashfall eine Bewegung eines Beckens oder eines Beckenbereichs eines Passagiers in Flugrichtung zuzulassen. Dabei ist die Freigabeeinrichtung 94a dazu vorgesehen, den Passagier zusammen mit einem Teil der Aufständereinheit 12a und dem Sitzboden 38a relativ zu der Aufständerebene 14a zu bewegen. Die Freigabeeinrichtung 94a weist ein Flugzeugsitzanbindungselement 98a auf. Das Flugzeugsitzanbindungselement 98a ist in einem montierten Zustand fest und positionssicher mit der Anbindungsschiene der Flugzeugkabine verbunden. Das Flugzeugsitzanbindungselement 98a weist einen fixierten Teilbereich auf, der fest mit der Anbindungsschiene verbunden ist, und einen axial zu dem fixierten Teilbereich verschiebbaren Teilbereich. Der verschiebbare Teilbereich des Flugzeugsitzanbindungselements 98a ist jeweils fest mit den Sitzfüßen 22a, 24a, 26a, 28a der Aufständereinheit 12a verbunden. In einem Normalbetriebszustand sind der fixierte Teilbereich und der verschiebbare Teilbereich fix zueinander positioniert. In einem Crashfall, insbesondere ab einer definierten Kraft, die auf das Flugzeugsitzanbindungselement 98a wirkt, trennt sich der verschiebbare Teilbereich von dem fixierten Teilbereich und der verschiebbare Teilbereich kann entlang einer Führungsschiene zu dem fixierten Teilbereich und dadurch zu der Aufständerebene bewegt werden. Das Flugzeugsitzanbindungselement 98a ist dazu vorgesehen, in einem Crashfall eine Bewegung von 10 Inch von der Aufständereinheit 12a relativ zu der Aufständereinheit 12a zuzulassen.

Die Sicherheitsvorrichtung 46a weist eine Energieumwandlungseinheit 96a auf. Die Energieumwandlungseinheit 96a ist dazu vorgesehen, eine Bewegungsenergie des Passagiers in einem Crashfall zumindest teilweise umzuwandeln. Die Energieumwandlungseinheit 96a ist dazu vorgesehen, eine Körperkinematik des Passagiers zur Reduzierung einer Kopfgeschwindigkeit und/oder einer Auftreffgeschwindigkeit auf der vorgelagerten Einheit 18a in einem Crashfall zu bewirken. Durch die Umwandlung der Bewegungsenergie des Passagiers nach einer Freigabe durch die Freigabeeinrichtung 72a kann insbesondere eine "Peitschenbewegung" des Oberkörpers des Passagiers verhindert und dadurch eine Verletzungsgefahr verringert werden. Die Energieumwandlungseinheit 96a ist dazu vorgesehen, eine Bewegungsenergie eines Passagiers in einem Prüfcrashfall nach einer Bewegungsfreigabe durch die Freigabeeinrichtung 72a zumindest teilweise umzuwandeln. Die Energieumwandlungseinheit 96a ist in die Multipunktrückhalteeinheit 54a integriert. Die Energieumwandlungseinheit 96a ist dazu vorgesehen, eine Bewegungsenergie des Passagiers relativ zu dem Flugzeugsitz 10a und der Multipunktrückhalteeinheit 54a, die der Passagier nach einer Bewegungsfreigabe durch die Freigabeeinrichtung 72a, 94a aufweist, umzuwandeln. Dazu ist die Energieumwandlungseinheit 96a an den Schultergurt 58a der Multipunktrückhalteeinheit 54a angebunden. Die Energieumwandlungseinheit 96a wandelt zumindest einen Teil der von dem Passagier auf den Schultergurt 58a der Multipunktrückhalteeinheit 54a wirkenden Kraft um. Die Energieumwandlungseinheit 96a weist dazu mehrere hintereinander angeordnete Umwandlungseinheiten 100a 102a auf. Die Umwandlungseinheiten 100a, 102a sind dazu vorgesehen, eine Bewegungsenergie des Schultergurts 58a in eine Verformungsenergie umzuwandeln. Dazu weisen die Umwandlungseinheiten 100a 102a mehrere, nicht näher dargestellte Verformungselemente auf, die zur Umwandlung der Bewegungsenergie plastisch verformt werden.

Die Sicherheitsvorrichtung 46a weist eine Energieumwandlungseinheit 104a auf. Die Energieumwandlungseinheit 104a ist dazu vorgesehen, eine Bewegungsenergie des Passagiers in einem Crashfall zumindest teilweise umzuwandeln. Die Energieumwandlungseinheit 104a ist dazu vorgesehen, eine Rotation des Passagiers in einem Crashfall zu bewirken. Die Energieumwandlungseinheit 104a weist eine Rotationseinheit 106a auf. Die Rotationseinheit 106a ist in die Aufständereinheit 12a und den Sitzboden 38a integriert. Die Rotationseinheit 106a ist dazu vorgesehen, eine Bewegungsenergie des Passagiers und/oder eine auf den Flugzeugsitz wirkende Beschleunigungsenergie in eine Rotation des Sitzbodens 38a umzuwandeln. Die Rotationseinheit 106a ist dazu vorgesehen, den Sitzboden 38a um eine im Wesentlichen senkrecht auf der Aufständerebene stehenden Achse rotierbar zu lagern. Die Rotationseinheit 106a ist dazu vorgesehen, den Sitzboden 38a in einem Crashfall um 20 Grad zu rotieren. Die Rotationseinheit 106a weist eine nicht näher dargestellte Lagerung auf, die den Sitzboden 38a schwenkbar zu der Aufständereinheit 12a lagert.

Die Sicherheitsvorrichtung 46a weist eine Energieumwandlungseinheit 108a auf. Die Energieumwandlungseinheit 108a ist von dem Sitzboden 38a ausgebildet. Die Energieumwandlungseinheit 108a ist dazu vorgesehen, durch eine Deformation des Sitzbodens 38a und/oder eines auf dem Sitzboden 38a angeordneten Sitzpolsters eine Bewegungsenergie des Passagiers umzuwandeln. Der Sitzboden 38a weist an einem vorderen Ende ein Spoilerelement 110a auf. Das Spoilerelement 110a ist dazu vorgesehen, ein Durchrutschen eines Passagiers zwischen dem Sitzboden 38a und der Multipunktrückhalteeinheit 54a, insbesondere zwischen dem Beckengurt 56a der Multipunktrückhalteeinheit 54a zu verhindern. Das Spoilerelement 110a ist als Rampe ausgebildet. Das Spoilerelement 110a bildet in dem vorderen Bereich des Sitzbodens 38a eine in Richtung der Rückenlehne 40a geneigte Schrägfläche aus.

Die Sicherheitsvorrichtung 46a weist eine Kommunikationseinheit 112a auf. Die Kommunikationseinheit 112a ist dazu vorgesehen, mit weiteren Kommunikationseinheiten anderer Flugzeugsitze, die ebenfalls in der Flugzeugkabine angeordnet sind, zu kommunizieren. Die Kommunikationseinheit 112a ist zu einer drahtlosen Kommunikation mit weiteren Kommunikationseinheiten vorgesehen. Die Kommunikationseinheit 112a ist dabei Teil einer nicht näher dargestellten Flugzeugsitzrecheneinheit. Die Flugzeugsitzrecheneinheit ist als eine eigenständige Recheneinheit ausgebildet. Die Flugzeugsitzrecheneinheit ist insbesondere lediglich dem Flugzeugsitz 10a zugeordnet. Grundsätzlich ist es auch denkbar, dass die Flugzeugsitzrecheneinheit allen Flugzeugsitzen 10a, 18a, 20a einer Flugzeugsitzreihe 16a zugeordnet ist. Die Flugzeugsitzrecheneinheit ist dazu vorgesehen, einen Belegungszustand des Flugzeugsitzes 10a zu ermitteln und zu verarbeiten. Ein Belegungszustand des Flugzeugsitzes 10a gibt dabei an, ob ein Passagier auf dem entsprechenden Flugzeugsitze 10a sitzt oder ob der Flugzeugsitz 10a frei ist. Die Kommunikationseinheit 112a ist insbesondere dazu vorgesehen, den von der Flugzeugsitzrecheneinheit ermittelten Belegungsparameter des Flugzeugsitzes10a an die weiteren Kommunikationseinheiten der anderen Flugzeugsitze zu versenden und die von den Anderen Kommunikationseinheiten ausgesendeten Belegungsparameter der anderen Flugzeugsitze zu empfangen. Die Belegungsparameter der weiteren Flugzeugsitze, die von der Kommunikationseinheit 112a empfangen werden, werden von der Flugzeugsitzrecheneinheit verarbeitet. Die Sicherheitsvorrichtung ist durch Verarbeitung der Belegungsparameter umliegender Flugzeugsitze mittels der Flugzeugsitzrecheneinheit dazu vorgesehen, ein Sicherheitskonzept anhand der Belegungsparameter anzupassen. Die Sicherheitsvorrichtung 46a weist eine Einstelleinheit 114a auf. Die Einstelleinheit 114a ist dazu vorgesehen, in Abhängigkeit des von der Kommunikationseinheit 112a versendeten Belegungsparameters und/oder wenigstens eines von der Kommunikationseinheit 112a empfangenen Belegungszustands wenigstens einen Crashparameter einzustellen. Ein Crashparameter ist dabei als ein Parameter einer Vorrichtung, Einrichtung oder Einheit, wie beispielsweise der Anbindungseinheit, der Freigabeeinrichtung, der Neigungseinheit und/oder der Energieumwandlungseinheit der Sicherheitsvorrichtung 46a, ausgebildet.

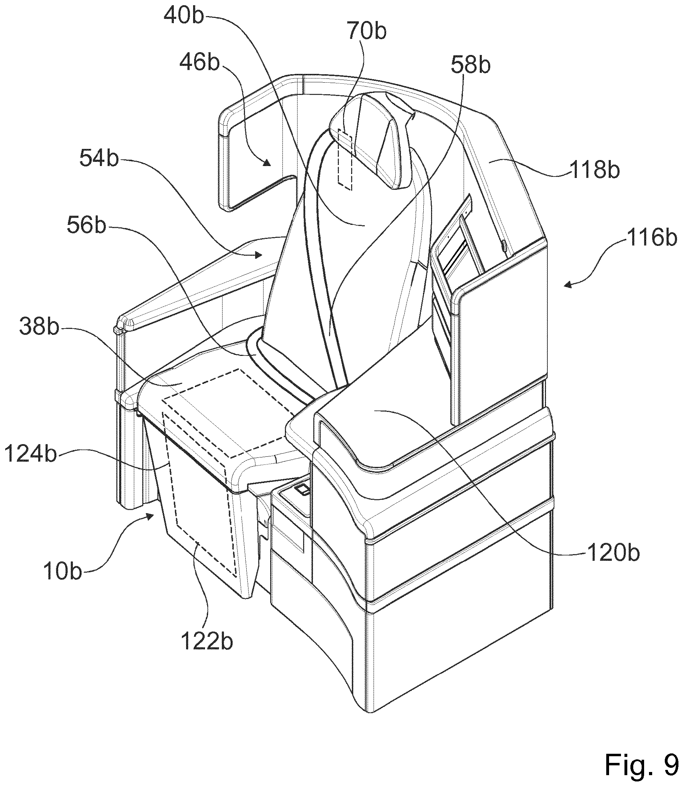

In Figur 9 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des anderen Ausführungsbeispiels, insbesondere der Figuren 1 bis 8, verwiesen werden kann. Zur Unterscheidung der Ausführungsbeispiele ist der Buchstabe a den Bezugszeichen des Ausführungsbeispiels in den Figuren 1 bis 8 nachgestellt. In dem Ausführungsbeispiel der Figur 9 ist der Buchstabe a durch den Buchstaben b ersetzt.

Die Figur 9 zeigt ein zweites Ausführungsbeispiel einer erfindungsgemäßen Flugzeugsitzvorrichtung. Die Flugzeugsitzvorrichtung ist dabei Teil eines Flugzeugsitzes 10b. Der Flugzeugsitz 10b ist als ein Economy-Flugzeugsitz ausgebildet. Der Flugzeugsitz 10b ist dazu vorgesehen, in einem nicht näher dargestellten Flugzeug aufgeständert zu werden. Der Flugzeugsitz 10b ist dabei in einem montierten Zustand in einer Flugzeugkabine des Flugzeugs aufgeständert. Dazu weist der Flugzeugsitz 10b eine Aufständereinheit 12b auf. Der Flugzeugsitz 10b ist Teil einer Businessclass-Sitzeinheit 116b. Die Businessclass-Sitzeinheit 116b ist dazu vorgesehen, einen Sitzbereich für den Flugzeugsitz 10b auszubilden. Die Businessclass-Sitzeinheit 116b weist eine Shell 118b auf, die einen Sitzbereich des Flugzeugsitzes 10b nach hinten und zumindest teilweise seitlich begrenzt. Seitlich neben dem Flugzeugsitz 10b bildet die Businessclass-Sitzeinheit 116b eine Konsole 120b aus. Der als Businessclass-Flugzeugsitz ausgebildete Flugzeugsitz 10b ist dazu vorgesehen, in eine Schlafposition (Full-Flat) gebracht zu werden. Dazu weist der Flugzeugsitz 10b eine Rückenlehne 40b, einen Sitzboden 38b und eine Fußstützeinheit 122b auf, die zu einer ebenen Liegefläche verstellbar sind. Der Flugzeugsitz 10b weist eine Kinematikeinheit 124b auf, die zur Verstellung der Rückenlehne 40b, des Sitzbodens 38b und der Fußstützeinheit 122b von einer Sitzposition in die Liegeposition vorgesehen ist. Die Kinematikeinheit 124b ist in der Aufständereinheit 12b des Flugzeugsitzes 10b integriert. Die Kinematikeinheit 124b weist mehrere Aktuatoren auf, über die die Rückenlehne 40b, der Sitzboden 38b und die Fußstützeinheit 122b verstellbar sind. Die Aktuatoren sind dabei als elektromechanische Aktuatoren ausgebildet. Grundsätzlich ist es ebenso denkbar, dass die Aktuatoren der Kinematikeinheit 124b als hydraulische- und/oder pneumatische Aktuatoren ausgebildet sind.

Die Flugzeugsitzvorrichtung weist eine Sicherheitsvorrichtung 46b auf. Die Sicherheitsvorrichtung 46b ist für den als Businessclass-Flugzeugsitz ausgebildeten Flugzeugsitz 10b vorgesehen. Die Sicherungsvorrichtung 46b weist eine Multipunktrückhalteeinheit 54b auf. Die Multipunktrückhalteeinheit 54b ist zur Fixierung des Passagiers auf dem Flugzeugsitz 10b vorgesehen. Mittels der Multipunktrückhalteeinheit 54b kann ein Passagier auf dem Flugzeugsitz 10b angeschnallt werden. Die Multipunktrückhalteeinheit 54b ist als ein Dreipunktgurt ausgebildet. Die Multipunktrückhalteeinheit 54b umfasst einen Beckengurt 56b und einen Schultergurt 58a. Der Beckengurt 56b ist dazu vorgesehen, den Passagier in einem Becken- und Hüftbereich zu sichern. Der Beckengurt 56b ist in einem geschlossenen Zustand der Multipunktrückhalteeinheit 54b dazu vorgesehen, den Sitzboden 38b zu überspannen. Der Beckengurt 56b ist dazu vorgesehen, dass der Passagier in einem geschlossenen Zustand der Multipunktrückhalteeinheit 54b mit einem Becken- und Schoßbereich zwischen dem Sitzboden 38b und dem Beckengurt 56b angeordnet ist. Der Schultergurt 58b ist dazu vorgesehen, einen Oberkörper des Passagiers an dem Flugzeugsitz 10b zu sichern. Der Schultergurt 58b ist insbesondere dazu vorgesehen, zur Sicherung des Passagiers auf dem Flugzeugsitz 10b von einem oberen Bereich der Rückenlehne 40b quer über eine Rückenlehnenfläche der Rückenlehne 40b zu einem unteren Ende der Rückenlehne 40b zu verlaufen. Der Schultergurt 58b verläuft in einem geschlossenen Zustand der Multipunktrückhalteeinheit 54b quer über einen Torso des Passagiers, so dass dieser gesichert ist.

Die Sicherheitsvorrichtung 46b weist eine Straffeinheit 70b auf. Die Straffeinheit 70b ist dazu vorgesehen, die Multipunktrückhalteeinheit 54b zumindest in einem Crashfall zumindest teilweise zu spannen. Die Straffeinheit 70b ist dazu vorgesehen, den Schultergurt 58b in einem Crashfall zu spannen. Die Sicherheitsvorrichtung 46b ist dazu vorgesehen, eine durch ein Aktuatorenspiel der Aktuatoren der Kinematikeinheit 124b ausgelöste Bewegung zumindest eines Teils eines Flugzeugsitzes10b in einem Prüfcrashfall für eine Auslösung der Straffeinheit 70b zu nutzen. Durch die Relativbewegung der Rückenlehne 40b, des Sitzbodens 38b und/oder der Fußstützeinheit 122b relativ zu der Aufständereinheit 12b des Flugzeugsitzes 10b in einem Crashfall kann die Straffeinheit 70b ausgelöst werden.

### Bezugszeichen

- 10: Flugzeugsitz
- 12: Aufständereinheit
- 14: Aufständerebene
- 16: Flugzeugsitzreihe
- 18: Flugzeugsitz
- 20: Flugzeugsitz
- 22: Sitzfuß
- 24: Sitzfuß
- 26: Sitzfuß
- 28: Sitzfuß
- 30: Tragelement
- 32: Tragelement
- 34: Sitzteiler
- 36: Sitzteiler
- 38: Sitzboden
- 40: Rückenlehne
- 42: Drehpunkt
- 44: oberes Ende
- 46: Sicherheitsvorrichtung
- 48: vorgelagertes Element
- 50: Crashtestdummy
- 52: Kontaktfeld
- 54: Multipunktrückhalteeinheit
- 56: Beckengurt
- 58: Schultergurt
- 60: Anbindungseinheit
- 62: Anbindungspunkt
- 64: Anbindungspunkt
- 66: Anbindungspunkt
- 68: Verschiebemechanismus
- 70: Straffeinheit
- 72: Freigabeeinrichtung
- 74: Neigungseinheit
- 76: Dämpfungseinheit
- 78: Dämpfungseinheit
- 80: Dämpfungseinheit
- 82: Dämpfungseinheit
- 84: Kraftbegrenzer
- 86: Kraftbegrenzer
- 88: Zerstörungselement
- 90: Zerstörungselement
- 92: Dopplung
- 94: Freigabeeinrichtung
- 96: Energieumwandlungseinheit
- 98: Flugzeugsitzanbindungselement
- 100: Umwandlungseinheit
- 102: Umwandlungseinheit
- 104: Energieumwandlungseinheit
- 106: Rotationseinheit
- 108: Energieumwandlungseinheit
- 110: Spoilerelement
- 112: Kommunikationseinheit
- 114: Einstelleinheit
- 116: Businessclass-Sitzeinheit
- 118: Shell
- 120: Konsole
- 122: Fußstützeinheit
- 124: Kinematikeinheit
- 126: Anschlagselement
- 128: Anschlagsfläche
- 130: Gepäckstange
- 132: Abstützstrebe
- 134: Abstützstrebe
- 136: Sitzteiler
- 138: Sitzteiler
- 140: Rahmen
- 142: Querversteifungselement
- 144: Querversteifungselement
- 146: Anbindungselement
- 148: Rückenlehne
- 150: Schalenelement
- 152: Bereich

## Patentansprüche

1. Flugzeugsitzreihe mit drei zumindest im Wesentlichen gleich ausgebildeten Flugzeugsitzen (10a, 18a, 20a), die jeweils eine Rückenlehne (40a) und eine Flugzeugsitzvorrichtung mit wenigstens einer Sicherheitsvorrichtung (46a; 46b) umfassen, die zur Sicherung eines Passagiers (50a) auf einem Flugzeugsitz (10a; 10b) vorgesehen ist und zumindest eine Multipunktrückhalteeinheit (54a) aufweist, die einen Beckengurt (56a) und einen Schultergurt (58a) umfasst, wobei die Sicherheitsvorrichtung (46a) zur Anbindung der Multipunktrückhalteeinheit (54a) eine Anbindungseinheit (60a) mit wenigstens einem Anbindungspunkt (66a) für den Schultergurt (58a) aufweist, **dadurch gekennzeichnet, dass** der Anbindungspunkt (66a) auf einer Seite der Rückenlehne (40a) angeordnet ist, die in Querrichtung einen kürzeren Abstand zu einem Sitzfuß (22a, 24a, 26a, 28a) aufweist als eine gegenüberliegende Seite der Rückenlehne (40a), wobei der Anbindungspunkt (66a) in einem oberen Bereich der Rückenlehne (40a) angeordnet ist, wobei in der Flugzeugsitzreihe (16a) mit mehreren Flugzeugsitzen (10a, 18a, 20a) alle Anbindungspunkte (66a) der Schultergurte (58a) der Flugzeugsitze (10a, 18a, 20a) auf einer Seite der jeweiligen Rückenlehne (40a) angeordnet sind, die in Querrichtung einen geringeren Abstand zu einem Sitzfuß (22a, 24a, 26a, 28a) aufweisen als die gegenüberliegende Seite der entsprechenden Rückenlehne (40a).

2. Flugzeugsitzreihe nach Anspruch 1, **dadurch gekennzeichnet, dass** die Sicherheitsvorrichtung (46a) zumindest eine Freigabeeinrichtung (72a) aufweist, die dazu vorgesehen ist, in einem Prüfcrashfall eine definierte Bewegung eines Passagiers (50a) zuzulassen.

3. Flugzeugsitzreihe nach Anspruch 2, **dadurch gekennzeichnet, dass** die Freigabeeinrichtung (72a) dazu vorgesehen ist, eine Schwenkbewegung der Rückenlehne (40a) freizugeben.

4. Flugzeugsitzreihe zumindest nach Anspruch 2, **dadurch gekennzeichnet, dass** die Freigabeeinrichtung (72a) zumindest einen Kraftbegrenzer (84a, 86a), insbesondere einen Gurtkraftbegrenzer, aufweist, der dazu vorgesehen ist, eine in der Multipunktrückhalteeinheit (54a) wirkende Kraft zumindest teilweise zu begrenzen.

5. Flugzeugsitzreihe zumindest nach Anspruch 2, **dadurch gekennzeichnet, dass** die Freigabeeinrichtung (72a) zumindest ein Zerstörungselement (88a, 90a), wie insbesondere eine Aufrissnaht in der Multipunktrückhalteeinheit, umfasst.

6. Flugzeugsitzreihe zumindest nach Anspruch 2, **dadurch gekennzeichnet, dass** die Freigabeeinrichtung (72a) dazu vorgesehen ist, in einer Aufständereinheit (12a) des Flugzeugsitzes (10a) angeordnet zu sein und eine Bewegung zumindest eines Teils der Aufständereinheit (12a) in einem Prüfcrashfall zuzulassen.

7. Flugzeugsitzreihe nach einem der vorhergehenden Ansprüche, **dadurch gekennzeichnet, dass** die Sicherheitsvorrichtung (46a) wenigstens ein Anschlagselement (126a) aufweist, das dazu vorgesehen ist, einen maximalen Schwenkwinkel der Rückenlehne (40a) zumindest in einem Crashfall durch eine direkte Abstützung an einem Teil einer Aufständereinheit (12a) oder eines Sitzteilers (34a, 36a) des Flugzeugsitzes (10a) zu begrenzen.

8. Flugzeugsitzreihe nach einem der vorhergehenden Ansprüche, **dadurch gekennzeichnet, dass** die Sicherheitsvorrichtung (46a) wenigstens eine Energieumwandlungseinheit (96a) aufweist, die dazu vorgesehen ist, eine Bewegungsenergie des Passagiers (50a) in einem Prüfcrashfall zumindest teilweise umzuwandeln.

9. Flugzeugsitzreihe nach Anspruch 8, **dadurch gekennzeichnet, dass** die Energieumwandlungseinheit (96a) zumindest zwei zumindest teilweise hintereinander geschaltete Umwandlungseinheiten (100a, 102a) aufweist.

10. Flugzeugsitzreihe nach einem der vorhergehenden Ansprüche, **dadurch gekennzeichnet, dass** der Schultergurt (58a) vom Beckengurt (56a) abnehmbar ist.

11. Flugzeugsitzreihe nach einem der vorhergehenden Ansprüche, **dadurch gekennzeichnet, dass** die Anbindungseinheit (60a) dazu vorgesehen ist, den Anbindungspunkt (66a) des Schultergurts (58a) der Multipunktrückhalteeinheit (54a) während eines Prüfcrashfalls zu verschieben.

12. Flugzeugsitzreihe nach einem der vorhergehenden Ansprüche, **dadurch gekennzeichnet, dass** die Seite der Rückenlehne (40a), an welcher der Anbindungspunkt (66a) für den Schultergurt (58a) angebunden ist, verstärkt ausgebildet ist.

## Claims

1. Aircraft seat row
with three aircraft seats (10a, 18a, 20a) which are realized substantially identically and in each case comprise a backrest (40a) and an aircraft seat device having at least one security device (46a; 46b),
the security device (46a; 46b) being configured for securing a passenger (50a) on an aircraft seat (10a; 10b) and including at least one multi-point restraining unit (54a) which comprises a pelvic strap (56a) and a shoulder strap (58a), wherein for a connection of the multi-point restraining unit (54a), the security device (46a) comprises a connection unit (60a) with at least one connection point (66a) for the shoulder strap (58a),
**characterised in that** the connection point (66a) is arranged on a side of the backrest (40a) which has in a transversal direction a shorter distance from a seat base (22a, 24a, 26a, 28a) than an opposite-situated side of the backrest (40a), wherein the connection point (66a) is arranged in an upper region of the backrest (40a),
wherein in the aircraft seat row (16a) with several aircraft seats (10a, 18a, 20a) all the connection points (66a) of the shoulder straps (58a) of the aircraft seats (10a, 18a, 20a) are arranged on a side of the respective backrest (40a) which has in a transversal direction a shorter distance from a seat base (22a, 24a, 26a, 28a) than the opposite-situated side of the backrest (40a).

2. Aircraft seat row according to claim 1,
**characterised in that** the security device (46a) comprises at least one release device (72a) which is configured, in a test crash case, to allow a defined movement of a passenger (50a).

3. Aircraft seat row according to claim 2,
**characterised in that** the release device (72a) is configured to release a pivoting movement of the backrest (40a).

4. Aircraft seat row at least according to claim 2,
**characterised in that** the release device (72a) comprises at least one force limiter (84a, 86a), in particular a belt load limiter, which is configured to at least partially delimit a force acting in the multi-point restraining unit (54a).

5. Aircraft seat row at least according to claim 2,
**characterised in that** the release device (72a) comprises at least one destruction element (88a, 90a), like in particular a tear-open seam in the multi-point restraining unit.

6. Aircraft seat row at least according to claim 2,
**characterised in that** the release device (72a) is configured to be arranged in a mounting unit (12a) of the aircraft seat (10a) and to permit a movement at least of part of the mounting unit (12a) in a test crash case.

7. Aircraft seat row according to one of the preceding claims,
**characterised in that** the security device (46a) comprises at least one abutment element (126a) which is configured, at least in case of a crash, to delimit a maximum pivot angle of the backrest (40a) by a direct support on a portion of a mounting unit (12a) or of a seat divider (34a, 36a) of the aircraft seat (10a).

8. Aircraft seat row according to one of the preceding claims,
**characterised in that** the security device (46a) comprises at least one energy conversion unit (96a), which is configured to at least partially convert a kinetic energy of the passenger (50a) in a test crash case.

9. Aircraft seat row according to claim 8,
**characterised in that** the energy conversion unit (96a) comprises at least two conversion units (100a, 102a), which are connected at least partially one behind the other one.

10. Aircraft seat row according to one of the preceding claims,
**characterised in that** the shoulder strap (58a) is detachable from the pelvic strap (56a).

11. Aircraft seat row according to one of the preceding claims,
**characterised in that** the connection unit (60a) is configured to displace the connection point (66a) of the shoulder strap (58a) of the multi-point restraining unit (54a) during a test crash case.

12. Aircraft seat row according to one of the preceding claims,
**characterised in that** the side of the backrest (40a) which the connection point (66a) for the shoulder strap (58a) is connected to is realized in a reinforced fashion.

## Revendications

1. Rangée de sièges d'avion avec trois sièges d'avion (10a, 18a, 20a) réalisés au moins sensiblement de façon identique,
chacun desquels comprend un dossier (40a) et un dispositif de siège d'avion avec au moins un dispositif de sécurité (46a ; 46b),
ledit dispositif de sécurité (46a ; 46b) étant prévu pour sécuriser un passager (50a) sur un siège d'avion (10a ; 10b) et comprenant au moins une unité de retenue multi-point (54a) qui comporte une sangle abdominale (56a) et une sangle d'épaule (58a), où pour un raccordement de l'unité de retenue multi-point (54a) le disposittif de sécurité (46a ; 46b) comprend une unité raccordante (60a) avec au moins un point de raccordement (66a) pour la sangle d'épaule (58a),
**caractérisée en ce que** le point de raccordement (66a) est disposé sur un côté du dossier (40a) ayant en direction transversale une distance d'une base de siège (22a, 24a, 26a, 28a) plus courte qu'un côté opposé du dossier (40a), le point de raccordement (66a) étant disposé dans une zone supérieure du dossier (40a), où dans la rangée de sièges (16a) avec plusieurs sièges d'avion (10a, 18a, 20a) tous les points de raccordement (66a) des sangles d'épaule (58a) des sièges d'avion (10a, 18a, 20a) sont disposés sur un côté du dossier respectif (40a) ayant en direction transversale une distance d'une base de siège (22a, 24a, 26a, 28a) plus courte que le côté opposé du dossier respectif (40a).

2. Rangée de sièges d'avion selon la revendication 1,
**caractérisée en ce que** le dispositif de sécurité (46a) comprend au moins un dispositif de relâchement (72a) qui est prévu pour permettre, en cas d'un essai de choc, un mouvement défini d'un passager (50a).

3. Rangée de sièges d'avion selon la revendication 2,
**caractérisée en ce que** le dispositif de relâchement (72a) est prévu pour relâcher un mouvement pivotant du dossier (40a).

4. Rangée de sièges d'avion au moins selon la revendication 2,
**caractérisée en ce que** le dispositif de relâchement (72a) comprend au moins un limiteur de force (84a, 86a), en particulier un limiteur de force de sangle, qui est prévu pour au moins partiellement limiter une force agissant dans l'unité de retenue multi-point (54a).

5. Rangée de sièges d'avion au moins selon la revendication 2,
**caractérisée en ce que** le dispositif de relâchement (72a) comprend au moins un élément à déstruction (88a, 90a), comme en particulier une couture à déchirure dans l'unité de retenue multi-point.

6. Rangée de sièges d'avion au moins selon la revendication 2,
**caractérisée en ce que** le dispositif de relâchement (72a) est prévu pour être disposé dans une unité-montage (12a) du siège d'avion (10a) et pour permettre, en cas d'un essai de choc, un mouvement au moins d'une partie de l'unité-montage (12a).

7. Rangée de sièges d'avion selon l'une des revendications précédentes,
**caractérisée en ce que** le dispositif de sécurité (46a) comprend au moins un élément de butée (126a) qui est prévu, au moins en cas de crash, pour limiter un angle pivotant maximal du dossier (40a) par le biais d'un support direct sur une partie d'une unité-montage (12a) ou d'un diviseur-sièges (34a, 36a) du siège d'avion (10a).

8. Rangée de sièges d'avion selon l'une des revendications précédentes,
**caractérisée en ce que** le dispositif de sécurité (46a) comprend au moins une unité de conversion d'énergie (96a) qui est prévue pour au moins partiellement convertir une énergie cinétique du passager (50a) en cas d'un essai de choc.

9. Rangée de sièges d'avion selon la revendication 8,
**caractérisée en ce que** l'unité de conversion d'énergie (96a) comprend au moins deux unités de conversion (100a, 102a) raccordées au moins partiellement l'une après l'autre.

10. Rangée de sièges d'avion selon l'une des revendications précédentes,
**caractérisée en ce que** la sangle d'épaule (58a) peut être détachée de la sangle abdominale (56a).

11. Rangée de sièges d'avion selon l'une des revendications précédentes,
**caractérisée en ce que** l'unité raccordante (60a) est prévue pour déplacer le point de raccordement (66a) de la sangle d'épaule (58a) de l'unité de retenue multi-point (54a) pendant un cas d'un essai de choc.

12. Rangée de sièges d'avion selon l'une des revendications précédentes,
**caractérisée en ce que** ce côté du dossier (40a) sur lequel est raccordé le point de raccordement (66a) pour la sangle d'épaule (58a) est réalisé à être renforcé.
